# EUROPEAN PATENT APPLICATION

(11) **EP 4 797 066 A1**
(43) Date of publication of application: **26.08.2026**
(21) Application number: 25783131.3
(22) Date of filing: 02.04.2025
(51) Int. Cl.: G06F 3/06, G06F 21/60, H04N 5/907, G06N 3/063

(54) **ELECTRONIC DEVICE FOR PROCESSING STREAM DATA**

(30) Priority: 04.04.2024 KR 20240046222; 10.01.2025 KR 20250004217
(71) Applicant: Samsung Electronics Co., Ltd., Suwon-si, Gyeonggi-do 16677 (KR)
(72) Inventor: JEONG, Seungyun, Suwon-si, Gyeonggi-do 16677 (KR); BAIK, Jinhwan, Suwon-si, Gyeonggi-do 16677 (KR); KIM, Sanggun, Suwon-si, Gyeonggi-do 16677 (KR); KIM, Jaemin, Suwon-si, Gyeonggi-do 16677 (KR); CHUN, Yongjin, Suwon-si, Gyeonggi-do 16677 (KR); HA, Hyeongju, Suwon-si, Gyeonggi-do 16677 (KR); JIN, Cheolgyu, Suwon-si, Gyeonggi-do 16677 (KR)
(74) Representative: Appleyard Lees IP LLP
(86) International application number: PCT/KR2025/004389
(87) International publication number: WO 2025/211772

(57) **Abstract**

An electronic apparatus includes: a memory configured to store data for computational processing of a processor; a stream input buffer configured to sequentially store input stream data that is input in a stream data format, convert the input stream data into a processor data format that is processable by the processor, and transmit, to the memory, the input stream data in the processor data format; the processor, which is configured to obtain, from the memory, the input stream data in the processor data format, and store, in the memory, computational processing result data for the input stream data in the processor data format; and a stream output buffer configured to store computational processing result data received from the memory in the processor data format, convert the computational processing result data into the stream data format, and sequentially output the computational processing result data in the stream data format.

## Description

### TECHNICAL FIELD

The disclosure relates to an electronic apparatus for processing stream data.

### BACKGROUND ART

A continuous vision (CV) system processes image/video data using a streaming method widely used in multimedia system-on-chip (SoC) applications, for example, camera image signal processors (ISPs), advanced driver-assistance systems (ADAS), and augmented reality (AR)/virtual reality (VR). A digital television (DTV) SoC is also one of representative commercial products that use the CV system. Maintaining high user satisfaction requires seamlessly displaying images/videos within a deterministic data processing time. As a result, the CV system in a multimedia SoC is implemented as pipelined fixed-functional modules, commonly referred to as vision pipelines, where the pipelined fixed-functional modules are interconnected using unidirectional first-in first-out (FIFO) and process data in a raster-scanned manner. However, this structure lacks flexibility and is difficult to adapt to various vision processing algorithms.

Moreover, due to the increasing demand for adapting to evolving high-performance algorithms in apparatuses requiring real-time stream data processing, such as DTVs and monitors, a more high-performance and flexible approach than existing methods has become necessary. Therefore, there has been demand for stream data SoCs that use processors instead of application-specific integrated circuits (ASICs). However, existing transfer protocols between stream data and processor data formats exhibit issues such as (1) an increased buffer size and (2) an extended interface (buffer)-memory occupation time.

### DISCLOSURE OF INVENTION

### SOLUTION TO PROBLEM

Aspects will be set forth in part in the description which follows and, in part, will be apparent from the description, or may be learned by practice of the presented embodiments.

According to an aspect of the disclosure, an electronic apparatus may include: a memory configured to store data for computational processing of a processor; a stream input buffer configured to sequentially store input stream data that is input in a stream data format, convert the input stream data into a processor data format that is processable by the processor, and transmit, to the memory, the input stream data in the processor data format; the processor, which is configured to obtain, from the memory, the input stream data in the processor data format, and store, in the memory, computational processing result data for the input stream data in the processor data format; a stream output buffer configured to store computational processing result data received from the memory in the processor data format, convert the computational processing result data into the stream data format, and sequentially output the computational processing result data in the stream data format; and a controller configured to determine a right to access the memory for the processor, the stream input buffer, and the stream output buffer, based on a state of the processor, a state of the stream input buffer and a state of the stream output buffer.

### BRIEF DESCRIPTION OF DRAWINGS

The above and other aspects, features, and advantages of certain embodiments of the present disclosure will be more apparent from the following description taken in conjunction with the accompanying drawings, in which:
FIG. 1 is a diagram illustrating a system for processing stream data, according to an embodiment of the disclosure;
FIG. 2 is a block diagram of an electronic apparatus for processing stream data, according to an embodiment of the disclosure;
FIG. 3 is a diagram illustrating a configuration of a stream input buffer and a stream output buffer, according to an embodiment of the disclosure;
FIG. 4 is a diagram for explaining an operation of a stream input buffer, according to an embodiment of the disclosure;
FIG. 5 is a diagram for explaining an operation of a stream output buffer, according to an embodiment of the disclosure;
FIG. 6 is a diagram for explaining the amount of data change in a stream input buffer, according to an embodiment of the disclosure;
FIG. 7 is a diagram for explaining the amount of data change in a stream output buffer, according to an embodiment of the disclosure;
FIG. 8 is a flowchart of a method by which a controller manages access rights to a memory, according to an embodiment of the disclosure;
FIG. 9 is a diagram for explaining access priority with respect to a memory, according to an embodiment of the disclosure;
FIG. 10 is a diagram for explaining access priority with respect to a memory, according to an embodiment of the disclosure;
FIG. 11 is a diagram for explaining access priority with respect to a memory, according to an embodiment of the disclosure;
FIG. 12 is a diagram for explaining access priority with respect to a memory, according to an embodiment of the disclosure; and
FIG. 13 is a diagram for explaining a processing time of a processor, according to an embodiment of the disclosure.

### MODE FOR THE INVENTION

The terms used in the disclosure will be briefly defined, and an embodiment of the disclosure will be described in detail.

All terms used in the disclosure are those general terms currently widely used in the art in consideration of functions in regard to an embodiment of the disclosure, but the terms may vary according to the intention of those of ordinary skill in the art, precedents, or new technologies in the art. Furthermore, some particular terms may be arbitrarily selected by the applicant, and in this case, the meaning of the selected terms will be described in detail in the detailed description of the disclosure. Thus, the terms used in the disclosure should be understood not as simple names but based on the meaning of the terms and the overall description of the disclosure.

Throughout the disclosure, the expression "at least one of a, b or c" indicates any number of "a", "b", "c", "a and b", "a and c", "b and c", "a, b, and c", or variations thereof.

Throughout the disclosure, when a portion "includes", "comprises", or "has" a component, another component may be further included, rather than excluding the presence of the other component, unless otherwise described. In addition, terms "...or/er", "...module", used in the disclosure refer to units that perform at least one function or operation, and the "...or/er" and "...module" may be implemented as hardware or software or as a combination of hardware and software.

It should be understood that blocks in each flowchart and combinations of flowcharts may be performed by one or more computer programs including computer-executable instructions. The one or more computer programs may all be stored in a single memory or may be divided and stored in different memories.

It is to be understood that the singular forms, e.g., "a", "an", and "the", include the plural forms as well, unless the context clearly indicates otherwise. Thus, for example, the term "a component surface" may also include one or more of such surfaces.

Any function or operation described in the present document may be performed by a single processor or a combination of processors. The single processor or the combination of processors may include circuitry that performs processing, such as an application processor (AP), a communication processor (CP), a graphics processing unit (GPU), a neural processing unit (NPU), a microprocessor unit (MPU), a system-on-chip (SoC), or an integrated chip (IC).

Hereinafter, an embodiment of the disclosure will be described in detail with reference to the accompanying drawings such that one of ordinary skill in the art may easily implement the embodiment of the disclosure. An embodiment of the disclosure may, however, be embodied in many different forms and should not be construed as limited to the embodiment of the disclosure set forth herein. In addition, components not related to description are omitted in the drawings for clear description of an embodiment of the disclosure, and like reference numerals in the drawings denote like components throughout the disclosure.

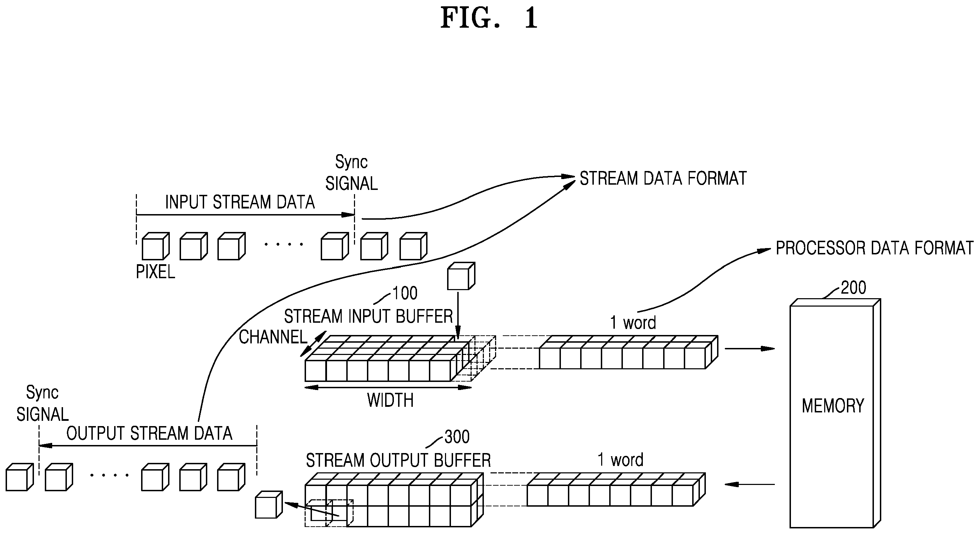

FIG. 1 is a diagram illustrating a system for processing stream data, according to an embodiment of the disclosure.

According to an embodiment of the disclosure, the stream data may refer to data that is continuously transmitted through an interface. For example, the stream data may refer to data that flows through in a minimum unit (e.g., one pixel in display) of individual data. The stream data may include image data, audio data, video data, multimedia data, spatiotemporal data (e.g., augmented reality (AR)/virtual reality (VR) content), or the like, but is not limited thereto. Hereinafter, for convenience of description, a case where the stream data is image data is described as an example. According to an embodiment of the disclosure, the stream data may have channel data. For example, when the stream data is image data, the stream data may include an R channel pixel, a G channel pixel, and a B channel pixel.

According to an embodiment of the disclosure, the stream data received from the outside may be stored in a buffer and then transmitted to a memory 200. Also, the stream data stored in the memory 200 and processed by a processor may be output to the outside through the buffer. The buffer may include a space to temporarily store data while the data is transmitted from one location to another. Because the processor is unable to immediately process the stream data, the stream data temporarily stored in the buffer may be transmitted to the memory 200 for processing by the processor. Hereinafter, the stream data received from the outside is defined as input stream data, and the stream data output to the outside is defined as output stream data. Also, the buffer storing the input stream data is defined as a stream input buffer 100, and the buffer storing the output stream data is defined as a stream output buffer 300.

According to an embodiment of the disclosure, the stream data may be sequentially transmitted to the stream input buffer 100 in a minimum unit (e.g., a pixel). In this regard, the minimum unit (e.g., a pixel) of individual data input into the stream input buffer 100 is referred to as a stream data format. That is, the input stream data may be sequentially stored in the stream data format (e.g., a pixel) in the stream input buffer 100.

According to an embodiment of the disclosure, the input stream data stored in the stream input buffer 100 may be transmitted to the memory 200 in a format processable by the processor. The format processable by the processor may refer to a minimum unit computationally processed by the processor. That is, the format processable by the processor may be a unit (e.g., a word) of data that the processor handles at a time. The word may be generated by stacking units of data (e.g., pixels) of the stream data into a single block. Hereinafter, the format processable by the processor is referred to as a processor data format.

In general, the size of the processor data format (e.g., a word) may be larger than the size of the stream data format (e.g., a pixel). Accordingly, when the input stream data in the stream data format is sequentially input, the stream input buffer 100 may convert the input stream data in the stream data format into the processor data format and transmit the same to the memory 200. According to an embodiment of the disclosure, converting the stream data format into the processor data format may include storing (accumulating) the input stream data sequentially input according to the processor data format. That is, converting the stream data format into the processor data format may include collecting units of data (e.g., pixels) input as stream data and generating a block (e.g., a word) in a certain form. For example, as shown in FIG. 1, when a word is composed of 8widthX2channel pixels, the stream input buffer 100 may stack pixels, which are units of data input sequentially, in the form of 8widthx2channel.

The input stream data stored in the memory 200 may be computed and processed by the processor. For example, the processor may receive the input stream data from the memory 200, perform computational processing, and then transmit computational processing result data to the memory 200. In this case, the computational processing result data may be transmitted to the memory 200 in the processor data format (e.g., a word). The stream output buffer 300 may receive the computational processing result data in the processor data format from the memory 200, convert the computational processing result data into the stream data format, and output the same to the outside. Converting the processor data format into the stream data format may refer to dividing a word, which is a large block, into units of data (e.g., pixels). For example, when the word is composed of 8widthX2channel pixels, the stream output buffer 300 may receive 8widthX2channel pixels at a time from the memory 200, store the pixels, and output the pixels to the outside one pixel at a time.

In addition, a system for processing stream data needs to store stream data in the memory 200 without omission according to a synchronization signal of an internal/external interface, read computational processing results back from the memory 200, and transmit the computational processing results to the outside without synchronization delay. For example, the system for processing stream data may process the stream data without omission according to the synchronization signal by using a line buffer method.

The line buffer method may be a method in which, when converting an input stream data format (e.g., pixels) into the processor data format (e.g., a word), the entire line data is stored and converted, and when converting the processor data format (e.g., a word) into an output stream data format (e.g. pixels) and outputting the same, the entire line data is converted and output. In this case, the line data may refer to the entire data transmitted between synchronization signals. The amount of line data may be fixed. For example, the entire pixels (e.g., 1920 pixels) between a first synchronization signal and a second synchronization signal may be one piece of line data.

In the case of the line buffer method, the stream input buffer 100 may store the entire line data in the stream data format (e.g., pixels), convert the entire line data into the processor data format (e.g., a word), and transmit the same to the memory 200. In this regard, the size of the line data and word may be expressed as the product of width and channel, but is not limited thereto. The size of the line data and word may also be expressed as the product of width, channel, and height.$1 Input Line Data = {Width}_{input} \times {Channel}_{input}$$1 word = {Width}_{word} \times {Channel}_{word}$

Equations for converting N pieces of line data (N input stream line data) into M words and vice versa in an interface are defined. Hereinafter, the interface may be the stream input buffer 100 or the stream output buffer 300. Because width information and channel information are not interchangeable, N and M may be expressed as Nwidth * Nchannel and Mwidth * Mchannel. ${N}_{width} \times {N}_{channel} \times Input Line Data = {M}_{width} \times {M}_{channel} \times words$

In the case of the line buffer method, because all of the required N pieces of line data need to be stored in the stream input buffer 100 and then replaced with M pieces of word data, or all of the M pieces of word data need to be stored in the stream output buffer 300 and then replaced with the N pieces of line data, a relatively large buffer size is required, which increases a chip area.

Also, in the case of the line buffer method, while the entire line data is transmitted to the memory 200, the exclusive occupancy duration of the memory 200 by the interface increases. For example, the total time required for 1 piece of input stream line data to be transmitted from the stream input buffer 100 to the memory 200 is as follows. This is because the stream input buffer 100 needs to convert the line data into word units and then transmit the same to the memory 200.${T}_{whole , input} = \frac{Input Stream Line Data}{word} = \frac{{Width}_{input} \times {Channel}_{input}}{{Width}_{word} \times {Channel}_{word}}$

Also, the total time required for one piece of output stream line data to be transmitted from the memory 200 to the stream output buffer 300 is as follows.${T}_{whole , output} = \frac{Output Stream Line Data}{word} = \frac{{Width}_{output} \times {Channel}_{output}}{{Width}_{word} \times {Channel}_{word}}$

Accordingly, the total occupancy time of the memory 200 that the interface (the stream input buffer 100 or the stream output buffer 300) needs to access based on the synchronization signal is *T_{access} = T_{whole,input} + T_{whole,output}.*

To enable flexible processing by the processor, the word size is required to gradually become smaller. However, according to the equation, as the word size decreases, the total occupancy duration (Taccess) of the memory 200 by the interface is increased. Therefore, according to the current development direction of the processor, in the line buffer method, the total occupancy duration of the memory 200 by the interface inevitably continues to increase.

Two additional methods may be considered to compensate for the aforementioned problems of the line buffer method.

To solve the problem of increasing buffer size in the line buffer method, the first method is to consider a method of granting priority to the interface (Priority to Interface method). In the case of the Priority to Interface method, the line data may be divided into smaller units for use. That is, only the minimum unit that may be transmitted may be used as a buffer.$\begin{matrix}{N}_{width} \times {N}_{channel} \times {Width}_{input} \times {Channel}_{input} \\ = {M}_{width} \times {M}_{channel} \times {Width}_{word} \times {Channel}_{word}\end{matrix}$$\left(\frac{{N}_{width}}{{M}_{width}}\times {Width}_{input}\right) \times \left(\frac{{N}_{channel}}{{M}_{channel}}\times {Channel}_{input}\right) = {Width}_{word} \times {Channel}_{word}$

External stream data may be divided into 1-pixel units and then transmitted. However, because a word is unable to be divided into smaller words, N/M may only have integer values greater than or equal to 1. Accordingly, a stream input buffer in the minimum unit for converting the stream data format into the processor data format may be as follows.$Interface Input Buffer = MAX \left(\frac{{N}_{width}}{{M}_{width}}, 1\right) \times MAX \left(\frac{{N}_{channel}}{{M}_{channel}}, 1\right) \times word$

In the case of the Priority to Interface method, while a buffer of the minimum size may be used for data format conversion, the memory 200 needs to be forcibly occupied for data transmission whenever the buffer is fully occupied. Thus, the processor is unable to use the memory 200 during the time when the interface forcibly occupies the memory 200.

When the time for the interface and the memory 200 to transmit one word per access is Tunit, the time Taccess for the interface to access the memory 200 may be expressed as the product of the number of accesses and Tunit.${T}_{access} = {Num}_{access} ∗ {T}_{unit} \left(1 word transaction per 1 access\right)$

To solve the problem of increasing a memory occupancy time by the interface, the second method is to consider a method of granting priority to the processor (Priority to Processor method). The Priority to Processor method may be a method in which the processor always retains access priority with respect to the memory 200, and the interface accesses the memory 200 only during the time when the processor does not use the memory 200.

The processor accesses the memory 200 to perform each computation, and there are intervals during which the processor does not momentarily access the memory 200. For example, the processor may not access the memory 200 while data obtained from the memory 200 is processed or when the type of computation changes. Accordingly, according to the Priority to Processor method, the interface does not interfere with the access of the processor to the memory 200. However, because it may not precisely predict when the processor does not access the memory 200, the buffer size needs to be maintained to be large in preparation for the worst-case scenario.

Therefore, according to an embodiment of the disclosure, to reduce performance degradation of the processor caused by the access of the interface to the memory 200 and to optimize the chip area, a hardware structure including a separate controller that manages access rights to the memory 200 between the interface and the processor may be provided. According to an embodiment of the disclosure, the controller may dynamically control access rights of the interface and the processor to the memory 200, thereby compensating for the problems of the line buffer method, the Priority to Interface method, and the Priority to Processor method.

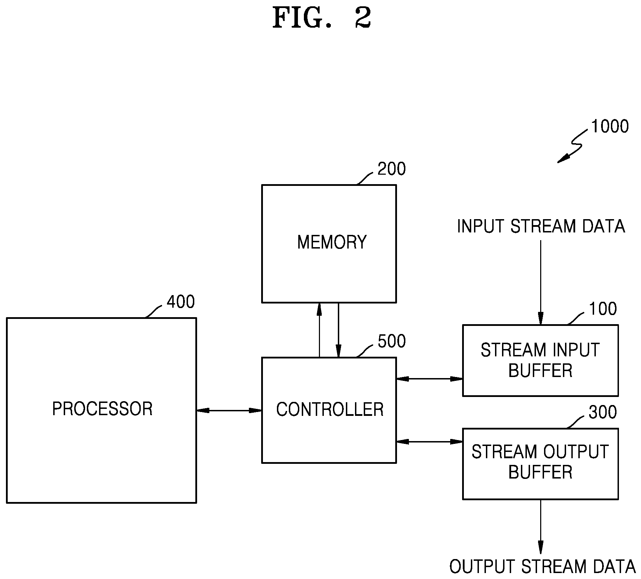

Hereinafter, the structure of the hardware for shortening the total processing time of the stream data by dynamically adjusting the occupancy duration of the memory 200 by the interface while reducing the buffer size is described in detail with reference to FIG. 2.

FIG. 2 is a block diagram of an electronic apparatus 1000 for processing stream data, according to an embodiment of the disclosure.

According to an embodiment of the disclosure, the electronic apparatus 1000 may include an apparatus for processing stream data. For example, the electronic apparatus 1000 may include a digital television (TV), an AR apparatus, a VR apparatus, a vehicle control apparatus (e.g., an advanced driver-assistance system (ADAS)), a wearable apparatus, a mobile terminal (e.g., a smart phone or a tablet personal computer (PC)), a PC, or the like, but is not limited thereto.

According to an embodiment of the disclosure, the electronic apparatus 1000 may include a stream input buffer 100, a memory 200, a stream output buffer 300, a processor 400, and a controller 500, but is not limited thereto. According to an embodiment of the disclosure, the stream input buffer 100, the memory 200, the stream output buffer 300, the processor 400, and the controller 500 may be configured as a SoC. Each component is described in order.

According to an embodiment of the disclosure, the stream input buffer 100 may include a minimum unit buffer area and an extra buffer area. The minimum unit buffer area may be a minimum unit size buffer for conversion between the stream data format and the processor data format. The minimum unit buffer area may have a fixed size. For example, the size of the minimum unit buffer area may be an integer multiple of the word size, where the word is the smallest unit processable by the processor 400. Accordingly, when the minimum unit buffer area is fully occupied, an integer multiple of the word may be generated. For example, when one piece of line data is 1920width X 16channel and one word is 192width X 2channel, the size of the minimum unit buffer area may be (192width X 2 channel) X 8. That is, the size of the minimum unit buffer area may be 8 times the word size. In this case, when the minimum unit buffer area is fully occupied, input stream data may be converted into 8 words. It should be understood that referring to the stream input buffer 100, stream output buffer 300, or any of the minimum unit buffer areas or extra buffer areas as "fully occupied" means that storage has reached an upper limit at which a respective buffer is configured to store data. It follows that referring storage space that is "available" in a buffer, refers to an availability with respect to the upper limit at which the buffer is configured to store data.

When the minimum unit buffer area is fully occupied and access rights of the stream input buffer 100 to the memory 200 is not granted, the extra buffer area may include a buffer space for storing input stream data that is input additionally. The extra buffer area may have various sizes. For example, the extra buffer area may be smaller or larger than the minimum unit buffer area. Also, the size of the extra buffer area may not be proportional to the word size. Moreover, the size of the extra buffer area may be proportional to the time during which the stream input buffer 100 may maintain a low access priority with respect to the memory 200. For example, as the time during which the stream input buffer 100 may maintain a low access priority with respect to the memory 200 increases, the size of the extra buffer area may increase. Accordingly, a user may set a desired processing time by adjusting the size of the stream input buffer 100.

According to an embodiment of the disclosure, the stream input buffer 100 may sequentially store input stream data in the stream data format input from the outside. For example, the stream input buffer 100 may sequentially store the input stream data from the minimum unit buffer area. When the minimum unit buffer area is fully occupied, the stream input buffer 100 may sequentially store the input stream data in the extra buffer area.

According to an embodiment of the disclosure, the stream input buffer 100 may convert the input stream data into the processor data format processable by the processor 400. The processor data format may include a word format, where a word is the smallest unit processable by the processor 400. Therefore, according to an embodiment of the disclosure, the stream input buffer 100 may convert the input stream data input in pixel units into word units. In this case, converting the stream data format (pixels) into the processor data format (word) may include stacking each pixel in the word format. For example, the stream input buffer 100 may stack sequentially input pixels in the minimum unit buffer area in width and channel directions. In this regard, because the size of the minimum unit buffer area is an integer multiple of the word, when the minimum unit buffer area is fully occupied by the input stream data, the input stream data stored in the minimum unit buffer area may be naturally converted into the processor data format (word).

According to an embodiment of the disclosure, when the stream input buffer 100 is granted access to the memory 200, the input stream data converted into the processor data format may be transmitted to the memory 200. That is, according to an embodiment of the disclosure, the stream input buffer 100 may access the memory 200 under control by the controller 500. For example, when the stream input buffer 100 is granted the access rights to the memory 200 by the controller 500, the stream input buffer 100 may convert the input stream data stored in the minimum unit buffer area into the processor data format and transmit the same to the memory 200. In contrast, when the stream input buffer 100 is not granted the access rights to the memory 200 by the controller 500, the stream input buffer 100 may not transmit the input stream data to the memory 200 and may sequentially store the input stream data in the extra buffer area.

According to an embodiment of the disclosure, the stream input buffer 100 may continuously transmit state information (e.g., available space, storage state, etc.) about the stream input buffer 100 to the controller 500. For example, the minimum unit buffer area is fully occupied by the input stream data, the stream input buffer 100 may transmit, to the controller 500, information indicating that the minimum unit buffer area is fully occupied. Because the size of the minimum unit buffer area is an integer multiple of the word size, the state in which the minimum unit buffer area is fully occupied may be a state in which the input stream data may be converted into the processor data format. Also, the stream input buffer 100 may transmit, to the controller 500, information indicating that the minimum unit buffer area is fully occupied and the extra buffer area has reached a threshold state. The stream input buffer 100 may also transmit, to the controller 500, information indicating that the minimum unit buffer area or the extra buffer area has available storage space.

According to an embodiment of the disclosure, the stream input buffer 100 may transmit, to the controller 500, a signal to increase the access priority with respect to the memory 200. For example, when the minimum unit buffer area is fully occupied and the extra buffer area has reached the threshold state, the stream input buffer 100 may transmit, to the controller 500, a signal to increase the access priority with respect to the memory 200. When the extra buffer area of the stream input buffer 100 has reached the threshold state, this may mean that the available storage space in the extra buffer area has fallen to or below a threshold value. Because the minimum unit buffer area and the extra buffer area are about to be fully occupied and thus are soon unable to store the input stream data, the stream input buffer 100 may transmit, to the controller 500, a signal to maximize the access priority with respect to the memory 200 for the stream input buffer 100. In this case, the stream input buffer 100 may be granted the access rights to the memory 200 by the controller 500 and access the memory 200. Accordingly, the stream input buffer 100 may convert the input stream data stored in the minimum unit buffer area into the processor data format and transmit the same to the memory 200. In this regard, because the minimum unit buffer area of the stream input buffer 100 becomes empty, the stream input buffer 100 may move the input stream data stored in the extra buffer area to the minimum unit buffer area. In addition, the stream input buffer 100 may sequentially store the input stream data in a remaining portion of minimum unit buffer area.

The memory 200 may also store programs for processing and control by the processor 400 or store pieces of input/output data. For example, the memory 200 may store the stream data converted into the processor data format (e.g., a word format) by the stream input buffer 100. Also, the memory 200 may store computational processing result data for the stream data of the processor 400 or may store intermediate computational result data of the processor 400. The memory 200 may transmit the stream data in the processor data format to the processor 400 and may also transmit the computational processing result data in the processor data format to the stream output buffer 300.

The memory 200 may include at least one type of storage medium from among a flash memory, hard disk, multimedia card micro type memory, card type memory (e.g., secure digital (SD) or extreme digital (XD) memory), random access memory (RAM), static RAM (SRAM), read-only memory (ROM), electrically erasable programmable ROM (EEPROM), programmable ROM (PROM), magnetic memory, magnetic disk, or optical disk.

The memory 200 may not be provided separately and may be configured to be included in the processor 400. The memory 200 may be configured as a volatile memory, a nonvolatile memory, or a combination of a volatile memory and a nonvolatile memory. The memory 200 may store a program or at least one instruction for performing operations according to an embodiment of the disclosure. The memory 200 may also provide stored data to the processor 400 upon request by the processor 400.

The stream output buffer 300 may include a minimum unit buffer area and an extra buffer area. The minimum unit buffer area may be a minimum unit size buffer for conversion between the processor data format and the stream data format. The minimum unit buffer area may have a fixed size. For example, the size of the minimum unit buffer area may be an integer multiple of the word size, where the word is the smallest unit processable by the processor 400. The extra buffer area of the stream output buffer 300 may be a buffer area in which data required to be output to the outside is received in advance from the minimum unit buffer area so that the minimum unit buffer area may receive data in the processor data format (word) from the memory 200. The extra buffer area may have various sizes. For example, the extra buffer area may be smaller or larger than the minimum unit buffer area. Also, the size of the extra buffer area may not be proportional to the word size. Moreover, the size of the extra buffer area of the stream output buffer 300 may be different from the extra buffer area of the stream input buffer 100.

According to an embodiment of the disclosure, the stream output buffer 300 may store the computational processing result data in the processor data format received from the memory 200. For example, when the computational processing result data is received from the memory 200, the stream output buffer 300 may first store the computational processing result data in the processor data format (e.g., a word format) in the minimum unit buffer area. Because the minimum unit buffer area is an integer multiple of the word size, when the computational processing result data in the word format is stored in the minimum unit buffer area, the minimum unit buffer area may be fully occupied. In addition, the stream output buffer 300 may push the computational processing result data stored in the minimum unit buffer area as much as possible into the extra buffer area and store the same across the minimum unit buffer area and the extra buffer area.

According to an embodiment of the disclosure, the stream output buffer 300 may convert the computational processing result data into the stream data format and sequentially output the same to the outside. For example, when the computational processing result data is stored across the minimum unit buffer area and the extra buffer area, the stream output buffer 300 may convert the computational processing result data stored in the minimum unit buffer area into the stream data format (e.g., a pixel unit) and sequentially output the same to the outside. Because the processor data format (e.g., a word) is generally larger than the stream data format (e.g., a pixel), converting the processor data format into the stream data format may include segmenting data in the stream data format to fit the stream data format. For example, when a word is composed of 10 pixels, the stream output buffer 300 may receive one word from the memory 200, store 10 pixels, and output the pixels to the outside one pixel at a time.

According to an embodiment of the disclosure, the stream output buffer 300 may continuously transmit state information (e.g., available space, storage state, etc.) about the stream output buffer 300 to the controller 500. For example, the stream output buffer 300 may transmit, to the controller 500, information indicating that the minimum unit buffer area and the extra buffer area are empty. The stream output buffer 300 may transmit, to the controller 500, information indicating that the minimum unit buffer area is empty. Because the size of the minimum unit buffer area is an integer multiple of the word size, the state in which the minimum unit buffer area is empty may be a state in which the computational processing result data in the processor data format (word) may be received. The stream output buffer 300 may transmit, to the controller 500, information indicating that the minimum unit buffer area is empty and the extra buffer area is in the threshold state. When the extra buffer area is in the threshold state, this may mean that there is almost no data left to be output to the outside in the extra buffer area. The stream output buffer 300 may also transmit, to the controller 500, information indicating that the minimum unit buffer area or the extra buffer area is fully occupied.

According to an embodiment of the disclosure, in response to being granted the access rights to the memory 200 by the controller 500, the stream output buffer 300 may receive the computational processing result data in the processor data format from the memory 200. For example, when the stream output buffer 300 is granted the access rights to the memory 200 by the controller 500, the stream output buffer 300 may access the memory 200. In this case, the stream output buffer 300 may receive the computational processing result data in the processor data format from the memory 200 and store the same in the minimum unit buffer area. In contrast, when the stream output buffer 300 is not granted the access rights to the memory 200 by the controller 500, the stream output buffer 300 may not additionally receive the computational processing result data from the memory 200. For example, when the minimum unit buffer area is empty and the access rights to the memory 200 is not granted by the controller 500, the stream output buffer 300 may convert the computational processing result data stored in the extra buffer area into the stream data format and sequentially output the same to the outside.

When the minimum unit buffer area is empty and the extra buffer area has reached the threshold state, the stream output buffer 300 may transmit, to the controller 500, a signal to increase the access priority with respect to the memory 200. For example, because the data stored in the minimum unit buffer area and the extra buffer area is soon to run out, the stream output buffer 300 may transmit, to the controller 500, a signal to maximize the access priority with respect to the memory 200 of the stream output buffer 300. The stream output buffer 300 may forcibly be granted the access rights to the memory 200 by the controller 500. In this case, the stream output buffer 300 may access the memory 200 and receive the computational processing result data in the processor data format from the memory 200.

The processor 400 may write data to the memory 200 or read data stored in the memory 200. In particular, data may be processed according to a predefined operation rule or an artificial intelligence model by executing the program or the at least one instruction stored in the memory 200.

The processor 400 may perform a function of processing data. For example, the processor 400 may obtain the input stream data converted into the processor data format from the memory 200. In addition, the processor 400 may perform computational processing on the input stream data converted into the processor data format. The processor 400 may store the computational processing result data for the input stream data converted into the processor data format in the memory 200 in the processor data format. Also, when a preset condition is satisfied, the processor 400 may execute an operation system (OS) and various applications stored in the memory 200.

The processor 400 may include one or more processors. The one or more processors included in the processor 400 may include circuitry such as a SoC or an integrated circuit (IC). The one or more processors included in the processor 400 may include a general-purpose processor such as a central processing unit (CPU), an MPU, an AP, or a digital signal processor (DSP), a graphics-dedicated processor such as a GPU or a vision processing unit (VPU), an artificial intelligence-dedicated processor such as an NPU, or a communication-dedicated processor such as a CP. When the one or more processors included in the processor 400 are artificial intelligence-dedicated processors, the artificial intelligence-dedicated processors may be designed with a hardware structure specialized for processing a specific artificial intelligence model. The processor 400 may be implemented as a single-core processor or a multi-core processor.

According to an embodiment of the disclosure, each of the stream input buffer 100, the stream output buffer 300, and the processor 400 needs to access the memory 200 to process the stream data. However, simultaneous access to the same memory address by the stream input buffer 100, the stream output buffer 300, and the processor 400 are impossible. Accordingly, managing the access priority with respect to the memory 200 among the stream input buffer 100, the stream output buffer 300, and the processor 400 is necessary.

According to an embodiment of the disclosure, the controller 500 may be provided to adjust the access priority with respect to the memory 200 between the interface and the processor 400. For example, the controller 500 may grant the access rights to the memory 200 for the stream input buffer 100, the stream output buffer 300, and the processor 400 based on the access priority with respect to the memory 200. Hereinafter, the controller 500 may also be referred to as a priority controller, and the stream input buffer 100, the processor 400, and the stream output buffer 300 may be referred to as modules.

According to an embodiment of the disclosure, the controller 500 may determine the access rights to the memory 200 for each module based on state information about each module or a request from each module. For example, the controller 500 may receive state information from each of the processor 400, the stream input buffer 100, and the stream output buffer 300. In addition, the controller 500 may determine the access rights to the memory 200 for the processor 400, the stream input buffer 100, and the stream output buffer 300 based on the state of the processor 400, the state of the stream input buffer 100 and the state of the stream output buffer 300. For example, the controller 500 may determine the access priority with respect to the memory 200 among the processor 400, the stream input buffer 100, and the stream output buffer 300 based on the state of the processor 400, the state of the stream input buffer 100 and the state of the stream output buffer 300, and may grant the access rights to the memory 200 for a module with the highest access priority.

According to an embodiment of the disclosure, when a request signal requesting the access rights to the memory 200 is received from one module among the processor 400, the stream input buffer 100, and the stream output buffer 300, the controller 500 may grant the access rights to the memory 200 for the module that has transmitted the request signal. For example, when only the stream input buffer 100 has requested the access rights to the memory 200 at the current time, the controller 500 may grant the access rights to the memory 200 for the stream input buffer 100.

According to an embodiment of the disclosure, when a request signal requesting the access rights to the memory 200 is received from two or more modules among the processor 400, the stream input buffer 100, and the stream output buffer 300, the controller 500 may grant the access rights to the memory 200 starting from the module with the highest access priority with respect to the memory 200 among modules that have transmitted the request signal.

In general, the processor 400 may have a higher access priority with respect to the memory 200 than the stream input buffer 100 and the stream output buffer 300. Also, as the buffer size decreases, the access priority with respect to the memory 200 may increase. That is, when the stream input buffer 100 and the stream output buffer 300 are in a normal state and the size of the stream input buffer 100 is smaller than that of the stream output buffer 300, the priority may be determined in the order of the processor 400, the stream input buffer 100, and the stream output buffer 300. When the stream input buffer 100 is in the normal state, this may mean that the extra buffer area has available storage space or that the extra buffer area is not in the threshold state. When the stream output buffer 300 is in the normal state, this may mean that data to be consumed is sufficient in the extra buffer area or that the extra buffer area is not in the threshold state. Accordingly, when the processor 400 and the stream input buffer 100 in the normal state simultaneously requests access to the memory 200, the controller 500 may allow the processor 400 to access the memory 200. Also, when the stream input buffer 100 requests access to the memory 200 while the processor 400 occupies the memory 200, the controller 500 may not allow the stream input buffer 100 to access the memory 200. For example, when information indicating that the minimum unit buffer area is fully occupied or the extra buffer area has available space is received from the stream input buffer 100, the controller 500 may determine the access rights to the memory 200 for the stream input buffer 100 based on the state of the processor 400. When the processor 400 occupies the memory 200, the controller 500 may not grant the access rights to the memory 200 for the stream input buffer 100, and when the processor 400 does not occupy the memory 200, the controller 500 may grant the access rights to the memory 200 for the stream input buffer 100. Also, when information indicating that the computational processing result data remains in the extra buffer area and the minimum unit buffer area is empty is received from the stream output buffer 300, the controller 500 may determine the access rights to the memory 200 for the stream output buffer 300 based on the state of the processor 400. That is, when the processor 400 occupies the memory 200, the controller 500 may not grant the access rights to the memory 200 for the stream output buffer 300, and when the processor 400 does not occupy the memory 200, the controller 500 may grant the access rights to the memory 200 for the stream output buffer 300.

According to an embodiment of the disclosure, when the stream input buffer 100 or the stream output buffer 300 is in the threshold state, the controller 500 may determine the highest access priority with respect to the memory 200 for the stream input buffer 100 or the stream output buffer 300. For example, when both the minimum unit buffer area and the extra buffer area of the stream input buffer 100 are about to be fully occupied, the stream input buffer 100 may transmit, to the controller 500, a signal to increase the access priority with respect to the memory 200. In this case, the controller 500 may adjust the access priority of the stream input buffer 100 to the highest. Accordingly, when the processor 400 occupies the memory 200, the controller 500 may stop access of the processor 400 and then allow the stream input buffer 100 to access the memory 200. Also, when the computational processing result data in the minimum unit buffer area and the extra buffer area of the stream output buffer 300 is soon to run out, the stream output buffer 300 may transmit, to the controller 500, a signal to increase the access priority with respect to the memory 200. In this case, the controller 500 may adjust the access priority of the stream output buffer 300 to the highest. Accordingly, when the processor 400 occupies the memory 200, the controller 500 may stop access of the processor 400 and then allow the stream output buffer 300 to access the memory 200.

According to an embodiment of the disclosure, when both the stream input buffer 100 and the stream output buffer 300 are in the threshold state, the controller 500 may determine a higher access priority for a less-sized buffer between the stream input buffer 100 and the stream output buffer 300. For example, when a signal to increase the access priority with respect to the memory 200 is simultaneously received from the stream input buffer 100 and the stream output buffer 300, the controller 500 may allow a less-sized buffer between the stream input buffer 100 and the stream output buffer 300 to access the memory 200. Accordingly, when the size of the stream input buffer 100 is smaller than that of the stream output buffer 300, the controller 500 may determine the access priority in the order of the stream input buffer 100, the stream output buffer 300, and the processor 400.

According to an embodiment of the disclosure, while the controller 500 ensures that the processor 400 has maximum access to the memory 200, only when the stream input buffer 100 or the stream output buffer 300 reaches the threshold state, the controller 500 may stop the processor 400 from accessing the memory 200 by increasing the access priority of the stream input buffer 100 or the stream output buffer 300, thereby minimizing a processing time of the processor 400. That is, according to an embodiment of the disclosure, the controller 500 that manages the access priority with respect to the memory 200 is separately arranged such that performance degradation of the processor 400 caused by the access of the interface to the memory 200 may be minimized. Also, according to an embodiment of the disclosure, by including the extra buffer area in the stream input buffer 100 and the stream output buffer 300, threshold conditions may be adaptively addressed. Furthermore, by using a buffer having a size approximating the minimum unit buffer area, the chip area may be optimized.

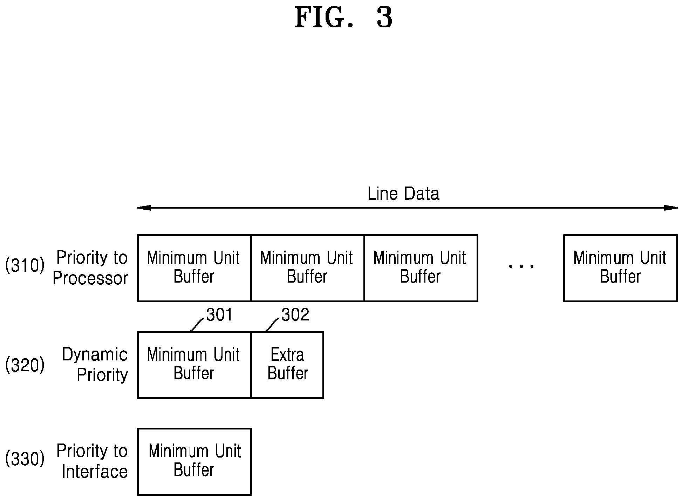

FIG. 3 is a diagram illustrating a configuration of a stream input buffer 100 and a stream output buffer 300, according to an embodiment of the disclosure.

According to an embodiment of the disclosure, the electronic apparatus 1000 may apply a Dynamic Priority method 320 combining the advantages of a Priority to Processor 400 method 310 and a Priority to Interface method 330.

In the case of the Priority to Processor 400 method 310, a buffer may have a space sufficient to store the entire line data to minimize interference with the access of the processor 400 to the memory 200. For example, the buffer using the Priority to Processor 400 method 310 may include M minimum unit buffer areas 301 to convert the stream data format into the processor data format based on the size of line data. When the line data is composed of 1920 pixels and the processor data format (word) is composed of 192 pixels, the buffer using the Priority to Processor 400 method 310 may include 10 minimum unit buffer areas 301. In the case of the Priority to Processor 400 method 310, the buffer size may increase, but performance degradation of the processor 400 may be minimized.

In the case of the Priority to Interface method 330, a buffer may include one minimum unit buffer area 301 to convert the stream data format into the processor data format. That is, according to the Priority to Interface method 330, when the minimum amount of stream data that needs to be converted into the processor data format is stored, the buffer may directly access the memory 200. Therefore, according to the Priority to Interface method 330, the performance of the processor 400 may deteriorate, but the buffer size may be minimized.

According to an embodiment of the disclosure, the Dynamic Priority method 320 may combine the advantage (e.g., minimizing performance degradation of the processor 400) of the Priority to Processor 400 method 310 and the advantage (e.g., minimizing the buffer size) of the Priority to Interface method 330. According to the Dynamic Priority method 320, the stream input buffer 100 and the stream output buffer 300 may include one minimum unit buffer area 301 and one extra buffer area 302. The minimum unit buffer area 301 may have a fixed size, but the extra buffer area 302 may have various sizes. The extra buffer area 302 may be smaller or larger than the minimum unit buffer area 301. When the extra buffer area 302 is larger than the minimum unit buffer area 301, the stream input buffer 100 and the stream output buffer 300 may include two or more minimum unit buffer areas 301. Therefore, according to an embodiment of the disclosure, during hardware design, the size of the extra buffer area 302 may be appropriately preset according to a network desired by a user, thereby configuring an interface optimized for both an appropriate chip size suitable for a system desired by the user and the performance of the processor 400.

According to an embodiment of the disclosure, when the minimum unit buffer area 301 is fully occupied by the stream data and the access rights to the memory 200 is not granted, the stream input buffer 100 may store, in the extra buffer area 302, stream data that is input additionally. The stream output buffer 300 may move data that needs to be output to the outside from the minimum unit buffer area 301 to the extra buffer area 302 so that data (words) in the processor data format may be received from the memory 200. Therefore, according to an embodiment of the disclosure, based on the Dynamic Priority method 320, by including the extra buffer area 302, performance degradation of the processor 400 may be minimized, as in the Priority to Processor 400 method 310. Also, according to an embodiment of the disclosure, based on the Dynamic Priority method 320, a buffer having a size closely approximating the minimum unit buffer area 301 may be used, thereby minimizing the chip area, as in the Priority to Interface method 330.

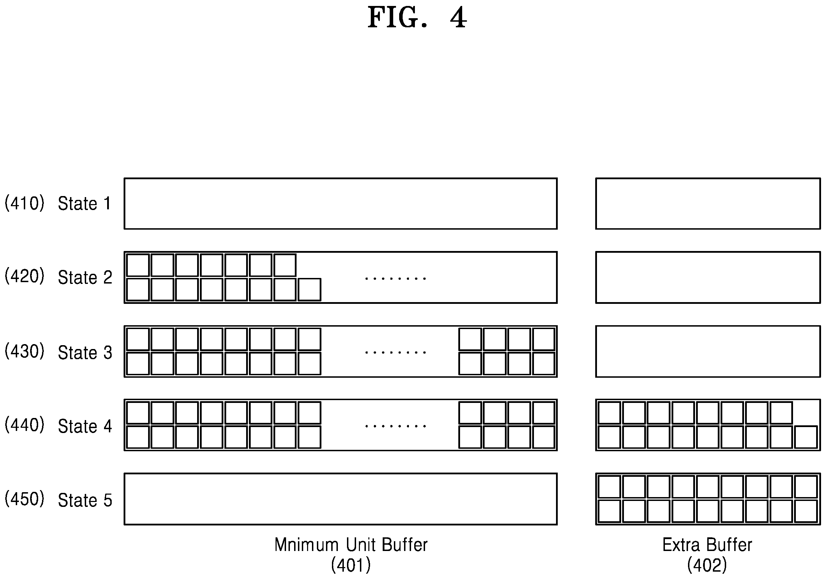

FIG. 4 is a diagram for explaining an operation of a stream input buffer 100, according to an embodiment of the disclosure.

According to an embodiment of the disclosure, the stream input buffer 100 may include a minimum unit buffer area 401 and an extra buffer area 402.

In a state 1 410, both the minimum unit buffer area 401 and the extra buffer area 402 of the stream input buffer 100 may be empty. In this case, when input stream data is sequentially input from the outside, the stream input buffer 100 may switch to a state 2 420. In the state 2 420, the stream input buffer 100 may sequentially store, in the minimum unit buffer area 401, input stream data (e.g., a pixel unit) that is input from the outside.

In a state 3 430, the minimum unit buffer area 401 is fully occupied by input stream data (e.g., pixels). That is, the state 3 430 may be a state in which conversion to the processor data format (e.g., a word) is possible and data in the processor data format may be recorded in the memory 200. For example, when a word is composed of 192 pixels, the minimum unit buffer area 401 may be occupied by data corresponding to an integer multiple of 192 pixels.

In the state 3 430, the stream input buffer 100 may transmit, to the controller 500, information indicating that the minimum unit buffer area 401 is fully occupied by the input stream data. When the processor 400 does not occupy the memory 200, the controller 500 may grant access rights to the memory 200 for the stream input buffer 100. In this case, the stream input buffer 100 may convert the input stream data into the processor data format and write the same to the memory 200. For example, the stream input buffer 100 may configure all pixels stored in the minimum unit buffer area 401 into one or more words and transmit the same to the memory 200. When the stream input buffer 100 has transmitted the input stream data stored in the minimum unit buffer area 401 to the memory 200, the stream input buffer 100 may switch to the state 1 410.

Moreover, when the stream input buffer 100 is in the state 3 430 and the processor 400 occupies the memory 200, the controller 500 may not grant the access rights to the memory 200 for the stream input buffer 100. In this case, the stream input buffer 100 may sequentially store the input stream data in the extra buffer area 402. While the stream input buffer 100 stores the input stream data in the extra buffer area 402, when the processor 400 temporarily stops the occupancy of the memory 200, the controller 500 may grant the access rights to the memory 200 for the stream input buffer 100. In this case, the stream input buffer 100 may convert the input stream data stored in the minimum unit buffer area 401 into the processor data format and write the same to the memory 200. In addition, the stream input buffer 100 may move the input stream data stored in the extra buffer area 402 to the minimum unit buffer area 401 and switch to the state 2 420.

A state 4 440 may be in a state in which the stream input buffer 100 is continuously unable to access the memory 200, and the minimum unit buffer area 401 and the extra buffer area 402 are about to be fully occupied (e.g., when the extra buffer area 402 has reached the threshold state). Because the stream input buffer 100 is soon no longer able to store input stream data, the stream input buffer 100 may transmit, to the controller 500, a signal to increase the access priority with respect to the memory 200. Before the extra buffer area 402 is fully occupied, the stream input buffer 100 may transmit, to the controller 500, a signal to increase the access priority with respect to the memory 200 in advance, taking into account the access time to the memory 200. When the signal to increase the access priority with respect to the memory 200 is received from the stream input buffer 100, the controller 500 may stop the processor 400 from accessing the memory 200 and allow the stream input buffer 100 to access the memory 200. After the stream input buffer 100 is forcibly granted high memory access rights by the controller 500, the stream input buffer 100 may convert the input stream data stored in the minimum unit buffer area 401 into the processor data format and write the same to the memory 200. While the stream input buffer 100 access the memory 200, the extra buffer area 402 may be fully occupied.

A state 5 450 indicates a state in which input stream data stored in the minimum unit buffer area 401 is transmitted to the memory 200, and then, only the extra buffer area 402 is fully occupied by the input stream data. In this case, the stream input buffer 100 may move the input stream data stored in the extra buffer area 402 to the minimum unit buffer area 401 for later conversion to the processor data format and switch to the state 2 420. In the state 2 420, the stream input buffer 100 may sequentially store, in the minimum unit buffer area 401, input stream data that is input from the outside.

In FIG. 4, a case where the extra buffer area 402 is smaller than the minimum unit buffer area 401 has been described as an example, but the disclosure is not limited thereto. The extra buffer area 402 may be larger than the minimum unit buffer area 401. Additionally, it should be understood that referring to either of the minimum unit buffer area 401 or the extra buffer area 402 as "fully occupied" does not necessarily require the buffer to be at its maximum capable occupancy. Rather, in some cases, the minimum unit buffer area 401 or the extra buffer area 402 may be "fully occupied" when reaching an upper limit at which the described operations are performed. FIG. 4 illustrates a case where the minimum unit buffer area 401 and the extra buffer area 402 are each shown as individual buffer areas. However, the disclosure is not limited thereto, and the minimum unit buffer area 401 or the extra buffer area 402 may include more than one buffer area.

According to an embodiment of the disclosure, during periods when the processor 400 does not occupy the memory 200, the stream input buffer 100 may access the memory 200, thereby minimizing interference with the access of the processor 400 to the memory 200.

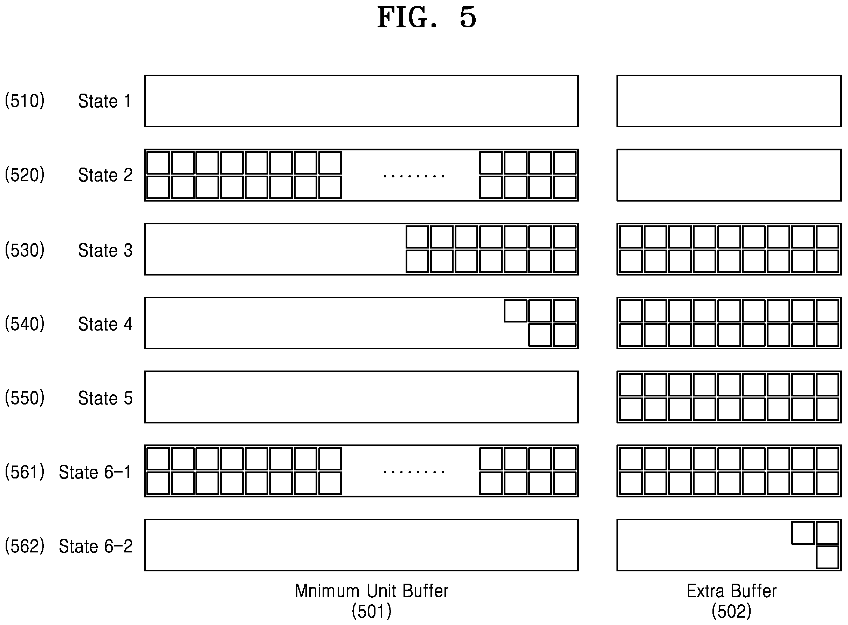

FIG. 5 is a diagram for explaining an operation of a stream output buffer 300, according to an embodiment of the disclosure.

According to an embodiment of the disclosure, the stream output buffer 300 may include a minimum unit buffer area 501 and an extra buffer area 502.

In a state 1 510, both the minimum unit buffer area 501 and the extra buffer area 502 of the stream output buffer 300 may be empty. In the state 1 510, because there is no data to be transmitted to the outside, the stream output buffer 300 may transmit, to the controller 500, a signal to increase the access priority with respect to the memory 200. The controller 500 may grant the access rights to the memory 200 for the stream output buffer 300. When the stream output buffer 300 is granted the access rights for the memory 200, the stream output buffer 300 may read data in the processor data format (e.g., a word format) from the memory 200. The data in the processor data format may be computational processing result data obtained by the processor 400 performing computations on the input stream data written to the memory 200 by the stream input buffer 100.

In a state 2 520, the stream output buffer 300 may store, in the minimum unit buffer area 501, computational processing result data in the processor data format read from the memory 200. For example, when the computational processing result data in the processor data format (e.g., a word format) is composed of 192 pixel data, the stream output buffer 300 may receive a word composed of 192 pixel data at a time and store the 192 pixel data in the memory 200.

In a state 3 530, the stream output buffer 300 may push and store the computational processing result data stored in the minimum unit buffer area 501 as much as possible into the extra buffer area 502. In order to continuously read the computational processing result data in the processor data format from the memory 200 at a later time, the stream output buffer 300 may push and store the computational processing result data stored in the minimum unit buffer area 501 as much as possible into the extra buffer area 502. When the extra buffer area 502 is smaller than the minimum unit buffer area 501, some of the computational processing result data may be stored in the minimum unit buffer area 501 in addition to the extra buffer area 502.

In a state 4 540, the stream output buffer 300 may convert the computational processing result data, starting from the computational processing result data stored in the minimum unit buffer area 501, into the stream data format (e.g., a pixel unit) and sequentially output the same to the outside. For example, the stream output buffer 300 may transmit the computational processing result data to the outside one pixel at a time.

A state 5 550 may be a state in which all the computational processing result data stored in the minimum unit buffer area 501 of the stream output buffer 300 is transmitted to the outside such that no computational processing result data remains in the minimum unit buffer area 501. In this case, because the stream output buffer 300 is able to receive the computational processing result data in the processor data format from the memory 200, the stream output buffer 300 may transmit, to the controller 500, information indicating that the minimum unit buffer area 501 is empty. In this regard, when the stream input buffer 100 and the processor 400 do not access the memory 200, the controller 500 may grant the access rights to the memory 200 for the stream output buffer 300. When the stream output buffer 300 is granted the access rights to the memory 200, the stream output buffer 300 may additionally receive the computational processing result data in the processor data format (word format) from the memory 200 and switch to a state 6-1 561. The state 6-1 561 may be a state in which both the minimum unit buffer area 501 and the extra buffer area 502 of the stream output buffer 300 are fully occupied. In the state 6-1 561, the stream output buffer 300 may consume the computational processing result data stored in the extra buffer area 502 as output stream data. For example, because data stored in the extra buffer area 502 is older than data stored in the minimum unit buffer area 501, the stream output buffer 300 may output the computational processing result data stored in the extra buffer area 502 in the stream data format (e.g., a pixel unit). When the data stored in the extra buffer area 502 is all consumed, the stream output buffer 300 may switch to the state 2 520. Accordingly, the stream output buffer 300 may push and store the computational processing result data stored in the minimum unit buffer area 501 as much as into the extra buffer area 502 and switch to the state 3 530.

In addition, in the state 5 550, when the stream input buffer 100 or the processor 400 occupies the memory 200, the controller 500 may not grant the access rights to the memory 200 for the stream output buffer 300. In this case, the stream output buffer 300 may consume the computational processing result data stored in the extra buffer area 502 as output stream data and switch to a state 6-2 562. Moreover, while the computational processing result data stored in the extra buffer area 502 is being consumed, when the stream input buffer 100 and the processor 400 stop occupying the memory 200, the controller 500 may grant the access rights to the memory 200 for the stream output buffer 300. When the stream output buffer 300 is granted the access rights to the memory 200, the stream output buffer 300 may receive the computational processing result data in the processor data format (word format) from the memory 200 and store the same in the minimum unit buffer area 501. After the data stored in the extra buffer area 502 is all consumed, the stream output buffer 300 may switch to the state 2 520.

The state 6-2 562 may be a state in which the stream output buffer 300 is continuously unable to access the memory 200 such that data to be consumed as output stream data is soon to run out (e.g., the extra buffer area 502 reaches the threshold state). The stream output buffer 300 may transmit, to the controller 500, a signal to increase the access priority with respect to the memory 200. Before the data in the extra buffer area 502 is all consumed, the stream output buffer 300 may transmit, to the controller 500, a signal to increase the access priority with respect to the memory 200 in advance, taking into account the access time to the memory 200. When the signal to increase the access priority with respect to the memory 200 is received from the stream output buffer 300, the controller 500 may stop the stream input buffer 100 or the processor 400 from accessing the memory 200 and allow the stream output buffer 300 to access the memory 200. After the stream output buffer 300 is forcibly granted high memory access rights by the controller 500, the stream output buffer 300 may read the computational processing result data in the processor data format (e.g., a word format) from the memory 200. The stream output buffer 300 may store the computational processing result data in the minimum unit buffer area 501, and while the stream output buffer 300 accesses the memory 200, the stream output buffer 300 may consume all the data stored in the extra buffer area 502 as output stream data, thus returning to the state 2 520.

In FIG. 5, a case where the extra buffer area 502 is smaller than the minimum unit buffer area 501 has been described as an example, but the disclosure is not limited thereto. The extra buffer area 502 may be larger than the minimum unit buffer area 501. It should be understood that referring to either of the minimum unit buffer area 501 or the extra buffer area 502 as "fully occupied" does not necessarily require the buffer to be at its maximum capable occupancy. Rather, in some cases, the minimum unit buffer area 501 or the extra buffer area 502 may be "fully occupied" when reaching an upper limit at which the described operations are performed. FIG. 5 illustrates a case where the minimum unit buffer area 501 and the extra buffer area 502 are each shown as individual buffer areas. However, the disclosure is not limited thereto, and the minimum unit buffer area 501 or the extra buffer area 502 may include more than one buffer area.

According to an embodiment of the disclosure, during periods when the processor 400 does not occupy the memory 200, the stream output buffer 300 may access the memory 200, thereby minimizing interference with the access of the processor 400 to the memory 200.

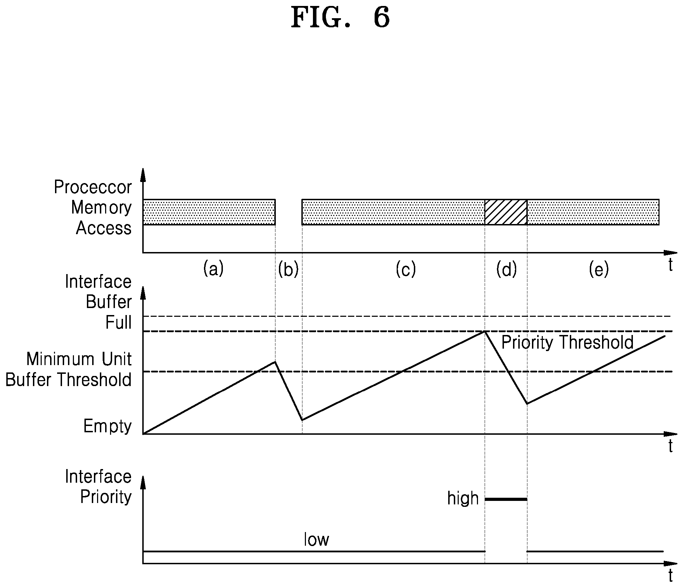

FIG. 6 is a diagram for explaining the amount of data change in a stream input buffer 100, according to an embodiment of the disclosure.

Referring to FIG. 6, in an interval (a), when input stream data is continuously input into the stream input buffer 100, the amount of data in the stream input buffer 100 may increase. The stream input buffer 100 may sequentially store the input stream data starting from the minimum unit buffer area 401. When the minimum unit buffer area 401 is fully occupied by the input stream data, the controller 500 may grant the access rights to the memory 200 for the stream input buffer 100 during a period when the processor 400 does not temporarily occupy the memory 200. For example, in an interval (b), when the processor 400 does not occupy the memory 200, the controller 500 may grant the access rights to the memory 200 for the stream input buffer 100. When the stream input buffer 100 is granted the access rights to the memory 200, the stream input buffer 100 may convert the input stream data into the processor data format (e.g., a word) and transmit the same to the memory 200. Accordingly, in the interval (b), the amount of data in the stream input buffer 100 may be reduced by word units.

In an interval (c), the stream input buffer 100 may store the input stream data again. In this case, when the minimum unit buffer area 401 is fully occupied and the processor 400 continuously occupies the memory 200, and thus, the stream input buffer 100 is unable to access the memory 200, the stream input buffer 100 may store the input stream data in the extra buffer area 402. Accordingly, the amount of data in the stream input buffer 100 may continue to increase.

In an interval (d), when there is no more space to store the input stream data in the stream input buffer 100 (when the minimum unit buffer area 401 is fully occupied and the extra buffer area 402 has reached the threshold state), the controller 500 may change the priority of the stream input buffer 100 to the memory 200 from low to high. In addition, the controller 500 may stop the processor 400 from accessing the memory 200 and then allow the stream input buffer 100 to access the memory 200. The stream input buffer 100 may convert the input stream data stored in the minimum unit buffer area 401 into the processor data format (e.g., a word format) and write the same to the memory 200. Accordingly, the amount of data in the stream input buffer 100 may be reduced by word units.

In an interval (e), because there is available space again in the stream input buffer 100, the controller 500 may change the priority of the stream input buffer 100 to the memory 200 from high to low and transfer the access rights to the memory 200 to the processor 400.

Therefore, according to an embodiment of the disclosure, during a period when the processor 400 does not temporarily occupy the memory 200 or only when the extra buffer area 402 has reached the threshold state, the stream input buffer 100 may access the memory 200, thereby minimizing interference with computational processing by the processor 400.

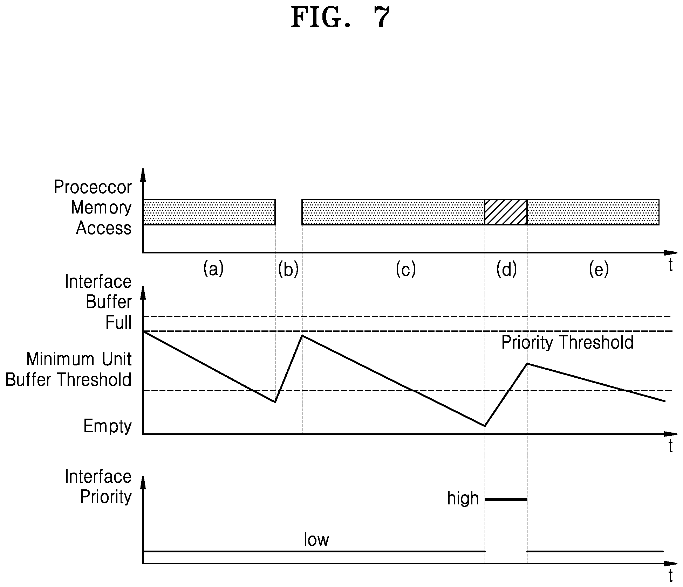

FIG. 7 is a diagram for explaining the amount of data change in a stream output buffer 300, according to an embodiment of the disclosure.

Referring to FIG. 7, in an interval (a), the stream output buffer 300 may continuously consume computational processing result data stored therein as output stream data. Accordingly, the amount of data in the stream output buffer 300 may be reduced. The stream output buffer 300 may convert data stored in the minimum unit buffer area 501 into the stream data format (e.g., a pixel unit) and output the same.

In an interval (b), when data in the minimum unit buffer area 501 is all consumed, the controller 500 may grant the access rights to the memory 200 for the stream output buffer 300 during a period when the processor 400 does not temporarily occupy the memory 200. When the stream output buffer 300 is granted the access rights to the memory 200, the stream output buffer 300 may read computational processing result data in the processor data format (e.g., a word) from the memory 200. Accordingly, the amount of data in the stream output buffer 300 may be increased by word units.

In an interval (c), the stream output buffer 300 may sequentially output the computational processing result data to the outside. In this case, when the computational processing result data of the minimum unit buffer area 501 is all consumed and the processor 400 continuously occupies the memory 200, and thus, the stream output buffer 300 is unable to access the memory 200, the stream output buffer 300 may consume computational processing result data stored in the extra buffer area 502. Accordingly, the amount of data in the stream output buffer 300 may continue to be reduced.

In an interval (d), when there is no more computational processing result data to be consumed in the stream output buffer 300 (when the minimum unit buffer area 501 is empty and the extra buffer area 502 has reached the threshold state), the controller 500 may change the priority of the stream output buffer 300 to the memory 200 from low to high. In addition, the controller 500 may stop the processor 400 from accessing the memory 200 and then allow the stream output buffer 300 to access the memory 200. In this case, the stream output buffer 300 may receive the computational processing result data in the processor data format (e.g., a word format) from the memory 200 and store the same in the minimum unit buffer area 501. Accordingly, the amount of data in the stream output buffer 300 may be increased by word units.

In an interval (e), because the stream input buffer 100 is occupied with data to be consumed, the controller 500 may change the priority of the stream output buffer 300 to the memory 200 from high to low and transfer the access rights to the memory 200 to the processor 400.

Therefore, according to an embodiment of the disclosure, during a period when the processor 400 does not temporarily occupy the memory 200 or only when the extra buffer area 502 has reached the threshold state, the stream output buffer 300 may access the memory 200, thereby minimizing interference with computational processing by the processor 400.

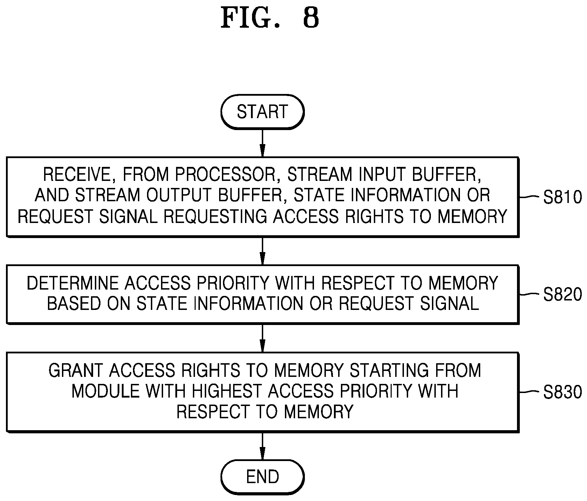

FIG. 8 is a flowchart of a method by which a controller 500 manages access rights to a memory 200, according to an embodiment of the disclosure.

Referring to FIG. 8, the method by which the controller 500 manages the access rights to the memory 200 may include operations S810 to S830. The method by which the controller 500 manages the access rights to the memory 200 is not limited to that shown in FIG. 8. In one or more embodiments, additional operations not shown in FIG. 8 may be included or some operations may be omitted.

In operation S810, according to an embodiment of the disclosure, the controller 500 may receive, from the processor 400, the stream input buffer 100, and the stream output buffer 300, state information or a request signal requesting access rights to the memory 200.

According to an embodiment of the disclosure, the controller 500 may frequently receive state information from each of the processor 400, the stream input buffer 100, and the stream output buffer 300. Each of the processor 400, the stream input buffer 100, and the stream output buffer 300 may periodically transmit state information thereof to the controller 500, or when a specific event occurs, may transmit state information thereof to the controller 500. For example, the processor 400 may transmit, to the controller 500, information indicating that the memory 200 is being occupied, information indicating that occupancy of the memory 200 is stopped, etc. The stream input buffer 100 may transmit, to the controller 500, information indicating that the minimum unit buffer area 401 is fully occupied, information indicating that the extra buffer area 402 has available space, information indicating that the extra buffer area 402 is in the threshold state, the total amount of data in the stream input buffer 100, the amount of data in the minimum unit buffer area 401, the amount of data in the extra buffer area 402, etc. The stream output buffer 300 may transmit, to the controller 500, information indicating that the minimum unit buffer area 501 is empty, information indicating that data is present in the extra buffer area 502, information indicating that the extra buffer area 502 is in the threshold state, the total amount of data in the stream input buffer 100, the amount of data in the minimum unit buffer area 501, the amount of data in the extra buffer area 502, etc. In this case, the controller 500 may continuously monitor the state of each of the processor 400, the stream input buffer 100, and the stream output buffer 300.

According to an embodiment of the disclosure, the controller 500 may also receive the request signal requesting the access rights to the memory 200. For example, when the minimum unit buffer area 401 of the stream input buffer 100 is fully occupied and the extra buffer area 402 has reached the threshold state (e.g., when there is almost no space to store input stream data in the stream input buffer 100), the controller 500 may receive, from the stream input buffer 100, a signal to increase the access priority with respect to the memory 200. When the minimum unit buffer area 501 of the stream output buffer 300 is empty and the extra buffer area 502 has reached the threshold state (e.g., when there is almost no data to be output to be outside in the stream output buffer 300), the controller 500 may receive, from the stream output buffer 300, a signal to increase the access priority with respect to the memory 200.

Hereinafter, each of the processor 400, the stream input buffer 100, and the stream output buffer 300 may be expressed as a module.

In operation S820, according to an embodiment of the disclosure, the controller 500 may determine access priority with respect to the memory 200 based on the request signal or the state information about the processor 400, the stream input buffer 100, and the stream output buffer 300.

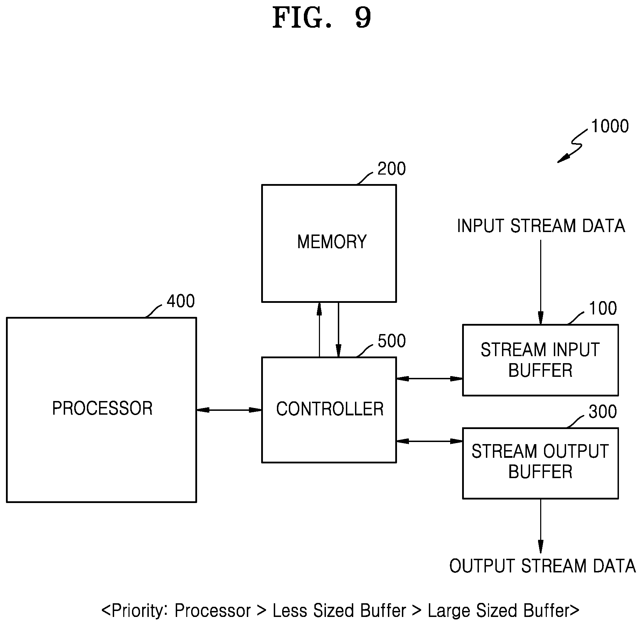

Referring to FIG. 9, according to an embodiment of the disclosure, when the stream input buffer 100 and the stream output buffer 300 are in the normal state, the controller 500 may determine a higher access priority with respect to the memory 200 for the processor 400 than the stream input buffer 100 and the stream output buffer 300. The normal state may mean that the extra buffer areas 501 and 502 are not in the threshold state. For example, the normal state of the stream input buffer 100 may be a state in which the minimum unit buffer area 401 or the extra buffer area 402 of the stream input buffer 100 has available space to store the input stream data. The normal state of the stream output buffer 300 may be a state in which computational processing result data to be consumed as output stream data is sufficiently stored in the minimum unit buffer area 501 or the extra buffer area 502.

In addition, when both the stream input buffer 100 and the stream output buffer 300 are in the normal state, a higher priority may be determined for a less-sized buffer between the stream input buffer 100 and the stream output buffer 300. For example, when the size of the stream output buffer 300 is smaller than that of the stream input buffer 100, the priority of the stream output buffer 300 may be higher than that of the stream input buffer 100.

In conclusion, referring to FIG. 9, when the stream input buffer 100 and the stream output buffer 300 are in the normal state and the stream output buffer 300 is smaller than the stream input buffer 100, the controller 500 may determine the access priority with respect to the memory 200 in the order of the processor 400, the stream output buffer 300, and the stream input buffer 100.

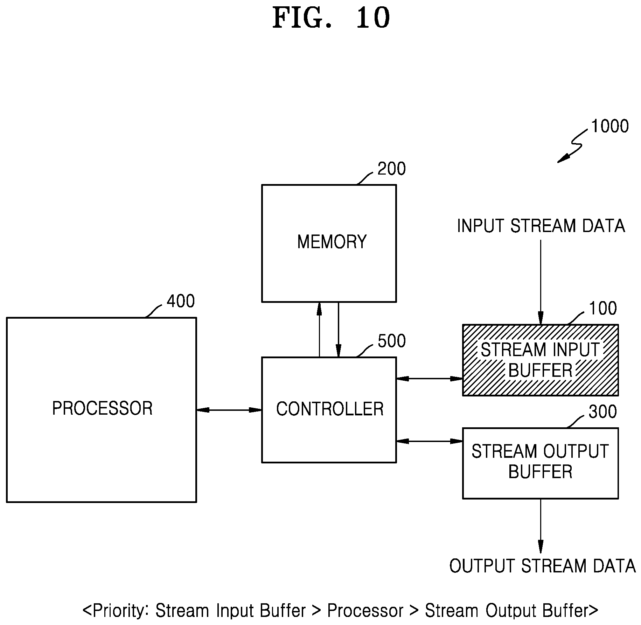

Referring to FIG. 10, according to an embodiment of the disclosure, when one of the stream input buffer 100 and the stream output buffer 300 are in the threshold state, the controller 500 may determine the highest access priority with respect to the memory 200 for the buffer in the threshold state. For example, when the stream input buffer 100 is in the threshold state, the controller 500 may determine the access priority with respect to the memory 200 in the order of the stream input buffer 100, the processor 400, and the stream output buffer 300. The threshold state of the stream input buffer 100 may refer to a state in which available space to store input stream data in the stream input buffer 100 (e.g., available space in the extra buffer area 402 is at or below a threshold value. In contrast, when the stream output buffer 300 is in the threshold state, the controller 500 may determine the access priority with respect to the memory 200 in the order of the stream output buffer 300, the processor 400, and the stream input buffer 100. The threshold state of the stream output buffer 300 may refer to a state in which computational processing result data to be consumed as output stream data in the stream output buffer 300 is at or below a threshold value.

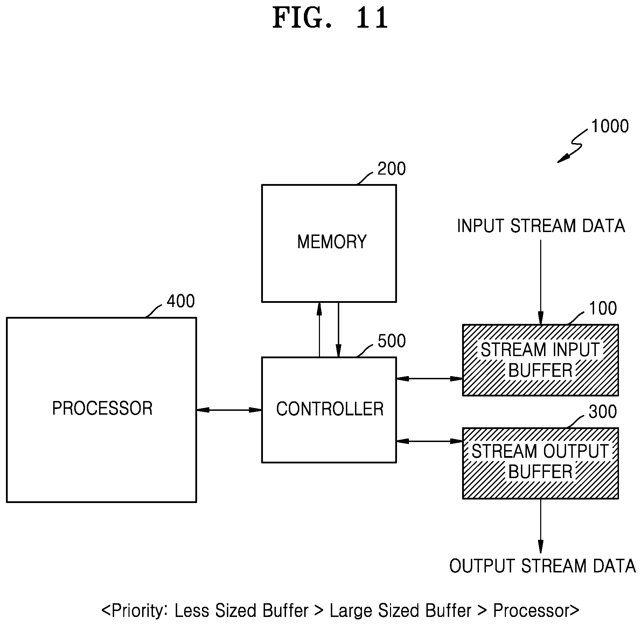

Referring to FIG. 11, according to an embodiment of the disclosure, when both the stream input buffer 100 and the stream output buffer 300 are in the threshold state, the controller 500 may determine a higher access priority with respect to the memory 200 for a less-sized buffer between the stream input buffer 100 and the stream output buffer 300. For example, when the size of the stream input buffer 100 is smaller than that of the stream output buffer 300, the controller 500 may determine the access priority with respect to the memory 200 in the order of the stream input buffer 100, the stream output buffer 300, and the processor 400. In contrast, when the size of the stream output buffer 300 is smaller than that of the stream input buffer 100, the controller 500 may determine the access priority with respect to the memory 200 in the order of the stream output buffer 300, the stream input buffer 100, and the processor 400.

Referring back to FIG. 8, in operation S830, according to an embodiment of the disclosure, the controller 500 may grant the access rights to the memory 200 starting from a module with the highest access priority with respect to the memory 200.

According to an embodiment of the disclosure, when a request signal requesting the access rights to the memory 200 is received from two or more modules among the processor 400, the stream input buffer 100, and the stream output buffer 300, the controller 500 may grant the access rights to the memory 200 starting from the module with the highest access priority with respect to the memory 200 among modules that have transmitted the request signal. For example, when the minimum unit buffer area 401 is fully occupied, and thus, a signal requesting access to the memory 200 is received from the stream input buffer 100, the controller 500 may determine the access rights to the memory 200 for the stream input buffer 100 based on the state of the processor 400 with a higher access priority with respect to the memory 200 than the stream input buffer 100. When the processor 400 occupies the memory 200, the controller 500 may not grant the access rights to the memory 200 for the stream input buffer 100, and when the processor 400 does not occupy the memory 200, the controller 500 may grant the access rights to the memory 200 for the stream input buffer 100.

Also, because computational processing result data remains in the extra buffer area 502 and the minimum unit buffer area 501 is empty, when the signal requesting access to the memory 200 is received from the stream output buffer 300, the controller 500 may determine the access rights to the memory 200 for the stream output buffer 300 based on the state of the processor 400 with a higher access priority with respect to the memory 200 than the stream output buffer 300. For example, when the processor 400 occupies the memory 200, the controller 500 may not grant the access rights to the memory 200 for the stream output buffer 300, and when the processor 400 does not occupy the memory 200, the controller 500 may grant the access rights to the memory 200 for the stream output buffer 300.

Moreover, when both the stream input buffer 100 and the stream output buffer 300 are in the threshold state and the stream input buffer 100 is smaller than the stream output buffer 300, the controller 500 may stop the processor 400 from accessing the memory 200 and grant the access rights to the memory 200 for the stream input buffer 100. In addition, when the stream input buffer 100 completes access to the memory 200 (e.g., when the input stream data converted into the processor data format is transmitted to the memory 200), the controller 500 may then grant the access rights to the memory 200 for the stream output buffer 300. When the stream output buffer 300 completes access to the memory 200 (e.g., when the computational processing result data in the processor data format is received from the memory 200), the controller 500 may grant the access rights to the memory 200 for the processor 400 again.

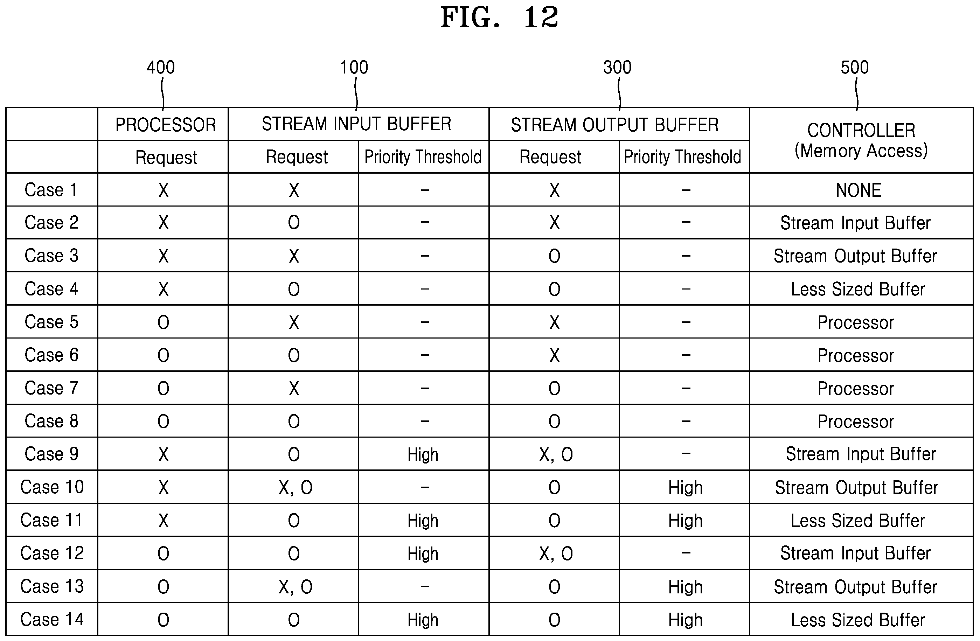

Referring to FIG. 12, the access priority with respect to the memory 200 is described in more detail.

FIG. 12 is a diagram for explaining access priority with respect to a memory 200, according to an embodiment of the disclosure.

According to an embodiment of the disclosure, because the processor 400, the stream input buffer 100, and the stream output buffer 300 are unable to simultaneously access the memory 200, the controller 500 may manage access of the processor 400, the stream input buffer 100, and the stream output buffer 300 to the memory 200 based on a request signal or state. In FIG. 12, an access request signal for the memory 200 may include state information.

In case 1, when an access request signal for the memory 200 is not received from the processor 400, the stream input buffer 100, and the stream output buffer 300, the controller 500 may not grant access rights to the memory 200 for all of the processor 400, the stream input buffer 100, and the stream output buffer 300.

In case 2, when an access request signal for the memory 200 is received from the stream input buffer 100 and an access request signal for the memory 200 is not received from the stream output buffer 300 and the processor 400, the controller 500 may grant access rights to the memory 200 for the stream input buffer 100.

In case 3, when an access request signal for the memory 200 is received from the stream output buffer 300 and an access request signal for the memory 200 is not received from the stream input buffer 100 and the processor 400, the controller 500 may grant access rights to the memory 200 for the stream output buffer 300.

In case 4, when an access request signal for the memory 200 is not received from the processor 400 and an access request signal for the memory 200 is simultaneously received from the stream input buffer 100 and the stream output buffer 300, the controller 500 may first grant access rights to the memory 200 for a less-sized buffer between the stream input buffer 100 and the stream output buffer 300. For example, when the size of the stream input buffer 100 is smaller than that of the stream output buffer 300, the controller 500 may first grant the access rights to the memory 200 for the stream input buffer 100. Thereafter, when the stream input buffer 100 terminates access to the memory 200, the controller 500 may grant the access rights to the memory 200 for the stream output buffer 300.

In case 5, when an access request signal for the memory 200 is received from the processor 400 and an access request signal for the memory 200 is not received from the stream input buffer 100 and the stream output buffer 300, the controller 500 may grant access rights to the memory 200 for the processor 400.

In case 6, the controller 500 may receive an access request signal for the memory 200 from the processor 400 and the stream input buffer 100. In this case, the stream input buffer 100 may be in the normal state. That is, the stream input buffer 100 may be in a state in which the minimum unit buffer area 401 is fully occupied and the extra buffer area 402 has available space to store data. The controller 500 may determine a higher access priority with respect to the memory 200 for the processor 400 than the stream input buffer 100 and grant the access rights to the memory 200 for the processor 400. Thereafter, when the processor 400 terminates access to the memory 200, the controller 500 may grant the access rights to the memory 200 for the stream input buffer 100.

In case 7, the controller 500 may receive an access request signal for the memory 200 from the processor 400 and the stream output buffer 300. In this case, the stream output buffer 300 may be in the normal state. That is, the stream output buffer 300 may be in a state in which the minimum unit buffer area 501 is empty and data to be output to the outside remains in the extra buffer area 502. The controller 500 may determine a higher access priority with respect to the memory 200 for the processor 400 than the stream output buffer 300 and grant the access rights to the memory 200 for the processor 400. Thereafter, when the processor 400 terminates access to the memory 200, the controller 500 may grant the access rights to the memory 200 for the stream output buffer 300.

In case 8, the controller 500 may receive an access request signal for the memory 200 from the processor 400, the stream input buffer 100, and the stream output buffer 300. In this case, the stream input buffer 100 and the stream output buffer 300 may be in the normal state. For example, the stream input buffer 100 may be in a state in which the minimum unit buffer area 401 is fully occupied and the extra buffer area 402 has available space to store data. The stream output buffer 300 may be in a state in which the minimum unit buffer area 501 is empty and data to be output to the outside remains in the extra buffer area 502. In this case, the controller 500 may determine a higher access priority with respect to the memory 200 for the processor 400 than the stream input buffer 100 and the stream output buffer 300 and grant the access rights to the memory 200 for the processor 400.

In case 9, the controller 500 may not receive an access request signal for the memory 200 from the processor 400 and may receive an access request signal for the memory 200 from the stream input buffer 100 in a threshold state. Also, the controller 500 may receive an access request signal for the memory 200 from the stream output buffer 300 in the normal state or may not receive an access request signal for the memory 200 from the stream output buffer 300. Because the stream input buffer 100 is in the threshold state (e.g., a state in which the minimum unit buffer area 401 and the extra buffer area 402 are about to be fully occupied), the controller 500 may determine the highest access priority with respect to the memory 200 for the stream input buffer 100 and grant the access rights to the memory 200 for the stream input buffer 100.

In case 10, the controller 500 may not receive an access request signal for the memory 200 from the processor 400 and may receive an access request signal for the memory 200 from the stream output buffer 300 in the threshold state. Also, the controller 500 may receive an access request signal for the memory 200 from the stream input buffer 100 in the normal state or may not receive an access request signal for the memory 200 from the stream input buffer 100. Because the stream output buffer 300 is in the threshold state (e.g., a state in which data to be consumed as output stream data is soon to run out), the controller 500 may determine the highest access priority with respect to the memory 200 for the stream output buffer 300 and grant the access rights to the memory 200 for the stream output buffer 300.

In case 11, the controller 500 may not receive an access request signal for the memory 200 from the processor 400 and may receive an access request signal for the memory 200 from the stream input buffer 100 in the threshold state and the stream output buffer 300 in the threshold state. In this case, the controller 500 may first grant the access rights to the memory 200 for a less-sized buffer between the stream input buffer 100 and the stream output buffer 300. For example, when the size of the stream input buffer 100 is smaller than that of the stream output buffer 300, the controller 500 may first grant the access rights to the memory 200 for the stream input buffer 100. Thereafter, when the stream input buffer 100 terminates access to the memory 200, the controller 500 may grant the access rights to the memory 200 for the stream output buffer 300.

In case 12, the controller 500 may receive an access request signal for the memory 200 from the processor 400 and the stream input buffer 100 in the threshold state. Also, the controller 500 may receive an access request signal for the memory 200 from the stream output buffer 300 in the normal state or may not receive an access request signal for the memory 200 from the stream output buffer 300. Because the stream input buffer 100 is in the threshold state (e.g., a state in which the minimum unit buffer area 401 and the extra buffer area 402 are about to be fully occupied), the controller 500 may determine the highest access priority with respect to the memory 200 for the stream input buffer 100 and grant the access rights to the memory 200 for the stream input buffer 100.

In case 13, the controller 500 may receive an access request signal for the memory 200 from the processor 400 and the stream output buffer 300 in the threshold state. Also, the controller 500 may receive an access request signal for the memory 200 from the stream input buffer 100 in the normal state or may not receive an access request signal for the memory 200 from the stream input buffer 100. Because the stream output buffer 300 is in the threshold state (e.g., a state in which data to be consumed as output stream data is soon to run out), the controller 500 may determine the highest access priority with respect to the memory 200 for the stream output buffer 300 and grant the access rights to the memory 200 for the stream output buffer 300.

In case 14, the controller 500 may receive an access request signal for the memory 200 from all of the processor 400, the stream input buffer 100 in the threshold state, and the stream output buffer 300 in the threshold state. In this case, because the stream input buffer 100 and the stream output buffer 300 are in the threshold state, the controller 500 may first grant the access rights to the memory 200 for a less-sized buffer between the stream input buffer 100 and the stream output buffer 300. For example, when the size of the stream input buffer 100 is smaller than that of the stream output buffer 300, the controller 500 may first grant the access rights to the memory 200 for the stream input buffer 100. Thereafter, when the stream input buffer 100 terminates access to the memory 200, the controller 500 may grant the access rights to the memory 200 for the stream output buffer 300.

According to an embodiment of the disclosure, the controller 500 may manage access to the memory 200 to the processor 400, the stream input buffer 100, and the stream output buffer 300 based on the access priority with respect to the memory 200, thereby minimizing performance degradation of the processor 400.

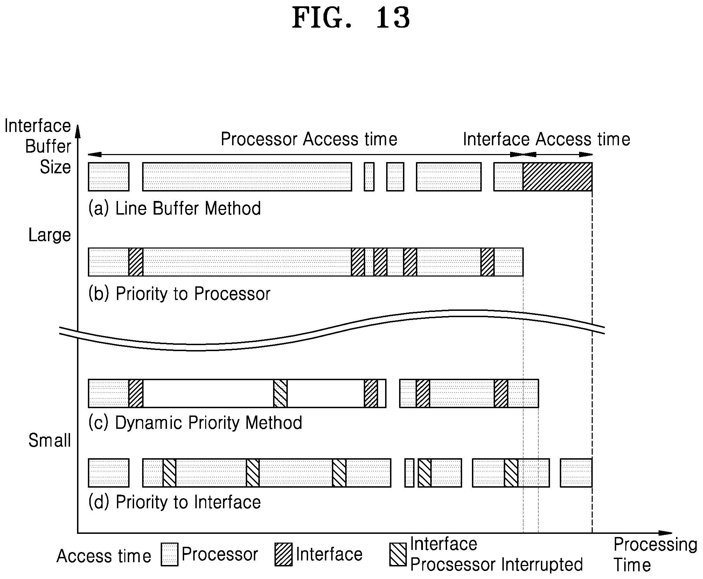

FIG. 13 is a diagram for explaining a processing time of a processor 400, according to an embodiment of the disclosure. In FIG. 13, it is assumed that the access time with respect to the memory 200 for computations performed by the processor 400 varies every moment.

According to a line buffer method (a), after the processor 400 completes all computations, an interface (e.g., a buffer) access the memory 200 and transmit data. Accordingly, according to the line buffer method (a), a computational processing time of the processor 400 for input stream data may increase, and the chip size may increase.

According to a Priority to Processor 400 method (b), an interface (e.g., a buffer) may access the memory 200 and transmit data during a period when the processor 400 does not access the memory 200. Therefore, according to the Priority to Processor 400 method (b), the processing time of the processor 400 may be the shortest, but it may predict when the processor 400 does not access the memory 200, and thus, the buffer size needs to be designed to be large in preparation for the worst-case scenario.

In the case of a Priority to Interface method (d), the memory 200 may be accessed whenever the buffer is fully occupied. That is, in a case where the processor 400 is accessing the memory 200 at that moment, the buffer may block the processor 400 from accessing the memory 200 and transmit data to the memory 200. Accordingly, according to the Priority to Interface method (d), because the processor 400 may be frequently interrupted by the buffer during computational processing, the processing time of the processor 400 may be increased.

According to an embodiment of the disclosure, in a Dynamic Priority method (c), at a moment when the processor 400 does not access the memory 200 and at a moment when the interface (e.g., the stream input buffer 100) is no longer able to maintain data (e.g., when the extra buffer area 402 is in the threshold state), the interface (e.g., the stream input buffer 100) may interrupt the processor 400 from accessing the memory 200, and may access the memory 200 and transmit data. Accordingly, the Dynamic Priority method (c) may shorten the processing time of the processor 400 compared to the Priority to Interface method (d) and may minimize the buffer size compared to the Priority to Processor 400 method (b). Also, according to the Dynamic Priority method (c), the time of stream data transmission may be appropriately managed by using a combination of the extra buffer area 402 and the minimum unit buffer area 401.

According to an embodiment of the disclosure, an electronic apparatus 1000 may be provided, which optimizes a chip area by using a combination of an extra buffer area and a minimum unit buffer area and further includes a controller 500 configured to manage access of a processor 400 and an interface (e.g., a buffer) to a memory 200, thereby minimizing performance degradation of the processor 400 caused by the access of the interface to the memory 200.

According to an embodiment of the disclosure, an electronic apparatus 1000 may include a memory 200 storing data for computational processing of a processor 400, a stream input buffer 100 configured to sequentially store input stream data input from outside in a stream data format, convert the input stream data into a processor data format processable by the processor 400, and transmit, to the memory 200, the input stream data converted into the processor data format, a processor 400 configured to obtain, from the memory 200, the input stream data converted into the processor data format and store, in the memory 200, in the processor data format, computational processing result data for the input stream data converted into the processor data format, a stream output buffer 300 configured to store the computational processing result data received from the memory 200 in the processor data format, convert the computational processing result data into the stream data format, and sequentially output the converted computational processing result data to the outside, and a controller 500 configured to determine, based on a state of the processor 400, a state of the stream input buffer 100, and a state of the stream output buffer 300, an access right to the memory 200 for the processor 400, the stream input buffer 100, and the stream output buffer 300.

According to an embodiment of the disclosure, the processor data format may include a format of a word that is a smallest unit processable by the processor 400. The word may be generated by stacking units of data (e.g., pixels) of the stream data into a single block.

According to an embodiment of the disclosure, each of the stream input buffer 100 and the stream output buffer 300 may include a minimum unit buffer area for conversion between the stream data format and the processor data format, and an extra buffer area.

According to an embodiment of the disclosure, a size of the minimum unit buffer area may be an integer multiple corresponding to a size of the word that is the smallest unit processable by the processor 400.

According to an embodiment of the disclosure, the stream input buffer 100 may be configured to transmit, to the controller 500, information indicating that the minimum unit buffer area of the stream input buffer 100 is fully occupied. When the access right to the memory 200 is granted by the controller 500, the stream input buffer 100 may be configured to convert input stream data stored in the minimum unit buffer area of the stream input buffer 100 into the processor data format, and transmit the converted input stream data to the memory 200. When the access right to the memory 200 is not granted by the controller 500, the stream input buffer 100 may be configured to sequentially store the input stream data in the extra buffer area of the stream input buffer 100.

According to an embodiment of the disclosure, the stream input buffer 100 may be configured to, when the minimum unit buffer area of the stream input buffer 100 is fully occupied and the extra buffer area of the stream input buffer 100 has reached a threshold state, transmit, to the controller 500, a signal to increase an access priority with respect to the memory 200. The stream input buffer 100 may be configured to, based on being granted the access right to the memory 200 by the controller 500, convert the input stream data stored in the minimum unit buffer area into the processor data format, and transmit the converted input stream data to the memory 200.

According to an embodiment of the disclosure, the stream input buffer 100 may be configured to, when the input stream data stored in the minimum unit buffer area of the stream input buffer 100 is converted into the processor data format and transmitted to the memory 200, move the input stream data stored in the extra buffer area of the stream input buffer 100 to the minimum unit buffer area of the stream input buffer 100.

According to an embodiment of the disclosure, the stream output buffer 300 may be configured to transmit, to the controller 500, information indicating that the minimum unit buffer area and the extra buffer area of the stream output buffer 300 are empty. The stream output buffer 300 may be configured to, in response to being granted the access right to the memory 200 by the controller 500, receive, from the memory 200, the computational processing result data in the processor data format. The stream output buffer 300 may be configured to store the computational processing result data in the minimum unit buffer area of the stream output buffer 300.

According to an embodiment of the disclosure, the stream output buffer 300 may be configured to push the computational processing result data stored in the minimum unit buffer area of the stream output buffer 300 as much as possible into the extra buffer area of the stream output buffer 300, and store the computational processing result data in the minimum unit buffer area and the extra buffer area of the stream output buffer 300. The stream output buffer 300 may be configured to convert the computational processing result data stored in the minimum unit buffer area of the stream output buffer 300 into the stream data format, and sequentially output the converted computational processing result data to the outside.

According to an embodiment of the disclosure, the stream output buffer 300 may be configured to transmit, to the controller 500, information indicating that the minimum unit buffer area is empty. The stream output buffer 300 may be configured to, when the access right to the memory 200 is granted by the controller 500, receive, from the memory 200, the computational processing result data in the processor data format and store the computational processing result data in the minimum unit buffer area of the stream output buffer 300. The stream output buffer 300 may be configured to, when the access right to the memory 200 is not granted by the controller 500, convert the computational processing result data stored in the extra buffer area of the stream output buffer 300 into the stream data format, and sequentially output the converted computational processing result data to the outside.

According to an embodiment of the disclosure, the stream output buffer 300 may be configured to, when the minimum unit buffer area of the stream output buffer 300 is empty and the extra buffer area of the stream output buffer 300 has reached the threshold state, transmit, to the controller 500, the signal to increase the access priority with respect to the memory 200. The stream output buffer 300 may be configured to, based on being granted the access right to the memory 200 by the controller 500, receive, from the memory 200, the computational processing result data in the processor data format. The stream output buffer 300 may be configured to store the computational processing result data in the minimum unit buffer area of the stream output buffer 300.

According to an embodiment of the disclosure, the controller 500 may be configured to, when a request signal requesting the access right to the memory (200) is received from one module among the processor 400, the stream input buffer 100, and the stream output buffer 300, grant the access right to the memory 200 for the module that has transmitted the request signal.

According to an embodiment of the disclosure, the controller 500 may be configured to, when the request signal requesting the access right to the memory 200 is received from two or more modules among the processor 400, the stream input buffer 100, and the stream output buffer 300, grant the access right to the memory 200 starting from a module with a highest access priority with respect to the memory 200 among modules that have transmitted the request signal.

According to an embodiment of the disclosure, the controller 500 may be configured to, when the stream input buffer 100 and the stream output buffer 300 are in a normal state, determine a higher access priority with respect to the memory 200 for the processor 400 than the stream input buffer 100 and the stream output buffer 300.

According to an embodiment of the disclosure, the controller 500 may be configured to, when both the stream input buffer 100 and the stream output buffer 300 are in the threshold state, determine a higher access priority with respect to the memory 200 for a less-sized buffer between the stream input buffer 100 and the stream output buffer 300.

According to an embodiment of the disclosure, the controller 500 may be configured to, when the stream input buffer 100 is in the threshold state, determine the access priority with respect to the memory 200 in an order of the stream input buffer 100, the processor 400, and the stream output buffer 300.

According to an embodiment of the disclosure, the controller 500 may be configured to receive state information from each of the processor 400, the stream input buffer 100, and the stream output buffer 300.

According to an embodiment of the disclosure, the controller 500 may be configured to, when the information indicating that the minimum unit buffer area of the stream input buffer 100 is fully occupied is received from the stream input buffer 100, determine, based on the state of the processor 400, the access right to the memory 200 for the stream input buffer 100.

According to an embodiment of the disclosure, the controller 500 may be configured to, when the processor 400 occupies the memory 200, not grant the access right to the memory 200 for the stream input buffer 100, and when the processor 400 does not occupy the memory 200, grant the access right to the memory 200 for the stream input buffer 100.

According to an embodiment of the disclosure, the controller 500 may be configured to, when information indicating that the computational processing result data remains in the extra buffer area of the stream output buffer 300 and the minimum unit buffer area of the stream output buffer 300 is empty is received from the stream output buffer 300, determine, based on the state of the processor 400, the access right to the memory 200 for the stream output buffer 300.

According to an embodiment of the disclosure, the processor data format may include a data word corresponding to a smallest unit processable by the processor.

According to an embodiment of the disclosure, each of the stream input buffer and the stream output buffer may include a minimum unit buffer area configured to convert between the stream data format and the processor data format, and an extra buffer area.

According to an embodiment of the disclosure, a size of the minimum unit buffer area may be an integer multiple of a size of the data word corresponding to the smallest unit processable by the processor.

According to an embodiment of the disclosure, the stream input buffer may be further configured to: transmit, to the controller, information indicating that the input stream data stored in the minimum unit buffer area of the stream input buffer has reached an upper limit, based on the right to access the memory being granted, convert the input stream data stored in the minimum unit buffer area of the stream input buffer into the processor data format, and transmit the input stream data to the memory in the processor data format, and based on the right to access the memory not being granted, sequentially store the input stream data in the extra buffer area of the stream input buffer.

According to an embodiment of the disclosure, the stream input buffer may be further configured to: based on the input stream data stored in the minimum unit buffer area of the stream input buffer reaching the upper limit and the extra buffer area of the stream input buffer reaching a threshold state, transmit, to the controller, a signal to increase a priority to access the memory, and based on the right to access the memory being granted, convert the input stream data stored in the minimum unit buffer area of the stream input buffer into the processor data format, and transmit the input stream data to the memory in the processor data format.

According to an embodiment of the disclosure, the stream input buffer may be further configured to, based on the input stream data stored in the minimum unit buffer area of the stream input buffer being transmitted to the memory in the processor data format, move the input stream data stored in the extra buffer area of the stream input buffer to the minimum unit buffer area of the stream input buffer.

According to an embodiment of the disclosure, the stream output buffer may be further configured to: transmit, to the controller, information indicating that the minimum unit buffer area and the extra buffer area of the stream output buffer are empty, based on being granted the right to access the memory, receive, from the memory, the computational processing result data in the processor data format, and store the computational processing result data in the minimum unit buffer area of the stream output buffer.

According to an embodiment of the disclosure, the stream output buffer may be further configured to: push the computational processing result data stored in the minimum unit buffer area of the stream output buffer into the extra buffer area of the stream output buffer, and store the computational processing result data in the minimum unit buffer area and the extra buffer area of the stream output buffer, and convert the computational processing result data stored in the minimum unit buffer area of the stream output buffer into the stream data format, and sequentially output the computational processing result data in the stream data format.

According to an embodiment of the disclosure, the stream output buffer may be further configured to: transmit, to the controller, information indicating that the minimum unit buffer area of the stream output buffer is empty, based on the right to access the memory being granted, receive, from the memory, the computational processing result data in the processor data format, and store the computational processing result data in the minimum unit buffer area of the stream output buffer, and based on the right to access the memory not being granted, convert the computational processing result data stored in the extra buffer area of the stream output buffer into the stream data format, and sequentially output the computational processing result data in the stream data format.

According to an embodiment of the disclosure, the stream output buffer may be further configured to: based on the minimum unit buffer area of the stream output buffer being empty and the extra buffer area of the stream output buffer reaching a threshold state, transmit, to the controller, a signal to increase a priority to access the memory; based on the right to access the memory being granted, receive, from the memory, the computational processing result data in the processor data format; and store the computational processing result data in the minimum unit buffer area of the stream output buffer.

According to an embodiment of the disclosure, the controller may be further configured to, based on receiving a request signal requesting the right to access the memory from one of the processor, the stream input buffer, or the stream output buffer, grant the right to access the memory to the one of the of the processor, the stream input buffer, or the stream output buffer that transmitted the request signal.

According to an embodiment of the disclosure, the controller may be further configured to, based on receiving the request signal requesting the right to access the memory from two or more of the processor, the stream input buffer, or the stream output buffer, grant the right to access the memory to one with a greatest priority to access the memory among the two or more of the processor, the stream input buffer, or the stream output buffer that transmitted the request signal.

According to an embodiment of the disclosure, the controller may be further configured to, based on the stream input buffer and the stream output buffer being in a normal state, determine the processor to have a greater priority to access the memory than the stream input buffer and the stream output buffer.

According to an embodiment of the disclosure, the controller may be further configured to, based on the stream input buffer and the stream output buffer being in a threshold state, determine a smaller of the stream input buffer or the stream output buffer to have a greater priority to access the memory .

According to an embodiment of the disclosure, the controller may be further configured to, based on the stream input buffer being in a threshold state, determine a priority to access the memory in an order of the stream input buffer, the processor, and the stream output buffer.

According to an embodiment of the disclosure, the controller may be further configured to receive state information from each of the processor, the stream input buffer, and the stream output buffer.

According to an embodiment of the disclosure, the controller may be further configured to, based on the input stream data stored in the minimum unit buffer area of the stream input buffer reaching an upper limit, determine, based on the state of the processor, the right to access the memory for the stream input buffer.

According to an embodiment of the disclosure, the controller may be further configured to: in a state in which the processor is accessing the memory, not grant the right to access the memory to the stream input buffer; and in a state in which the processor is not accessing the memory, grant the right to access the memory to the stream input buffer.

According to an embodiment of the disclosure, the controller may be further configured to, based on the computational processing result data being stored in the extra buffer area of the stream output buffer and the minimum unit buffer area of the stream output buffer being empty, determine, based on the state of the processor, the right to access the memory for the stream output buffer.

A machine-readable storage medium may be provided in the form of a non-transitory storage medium. In this regard, the "non-transitory storage medium" simply means that the storage medium is a tangible apparatus and does not include a signal (e.g., an electromagnetic wave), but this term does not differentiate between where data is semi-permanently stored in the storage medium and where the data is temporarily stored in the storage medium. For example, the "non-transitory storage medium" may include a buffer in which data is temporarily stored.

According to an embodiment of the disclosure, the method according to various embodiments provided in the present document may be provided by being included in a computer program product. The computer program product may be traded as a product between a seller and a buyer. The computer program product may be distributed in the form of a machine-readable storage medium (e.g., a compact disc ROM (CD-ROM)), or distributed (e.g., downloaded or uploaded) through an application store, or directly or online between two user apparatuses (e.g., smart phones). In the case of online distribution, at least a portion of a computer program product (e.g., a downloadable application) may be temporarily stored in a machine-readable storage medium, such as memory of a manufacturer's server, an application store's server, or a relay server, or may be temporarily generated.

The above-described embodiments are merely specific examples to describe technical content according to the embodiments of the disclosure and help the understanding of the embodiments of the disclosure, not intended to limit the scope of the embodiments of the disclosure. Accordingly, the scope of various embodiments of the disclosure should be interpreted as encompassing all modifications or variations derived based on the technical spirit of various embodiments of the disclosure in addition to the embodiments disclosed herein.

## Claims

1. An electronic apparatus comprising:
a memory (200) configured to store data for computational processing of a processor;
a stream input buffer (100) configured to sequentially store input stream data that is input in a stream data format, convert the input stream data into a processor data format that is processable by the processor, and transmit, to the memory, the input stream data in the processor data format;
the processor, (400) which is configured to obtain, from the memory, the input stream data in the processor data format, and store, in the memory, computational processing result data for the input stream data in the processor data format;
a stream output buffer (300) configured to store computational processing result data received from the memory in the processor data format, convert the computational processing result data into the stream data format, and sequentially output the computational processing result data in the stream data format; and
a controller (500) configured to determine a right to access the memory for the processor, the stream input buffer, and the stream output buffer, based on a state of the processor, a state of the stream input buffer and a state of the stream output buffer.

2. The electronic apparatus of claim 1, wherein the processor data format comprises a data word corresponding to a smallest unit processable by the processor (400).

3. The electronic apparatus of claim 1 or 2, wherein each of the stream input buffer (100) and the stream output buffer (300) comprises a minimum unit buffer area configured to convert between the stream data format and the processor data format, and an extra buffer area.

4. The electronic apparatus of claim 3, wherein a size of the minimum unit buffer area is an integer multiple of a size of the data word corresponding to the smallest unit processable by the processor.

5. The electronic apparatus of any one of claims 1 to 4, wherein the stream input buffer (100) is further configured to:
transmit, to the controller (500), information indicating that the input stream data stored in the minimum unit buffer area of the stream input buffer has reached an upper limit,
based on the right to access the memory (200) being granted, convert the input stream data stored in the minimum unit buffer area of the stream input buffer (100) into the processor data format, and transmit the input stream data to the memory (200) in the processor data format, and
based on the right to access the memory (200) not being granted, sequentially store the input stream data in the extra buffer area of the stream input buffer (100).

6. The electronic apparatus of claim 5, wherein the stream input buffer (100) is further configured to:
based on the input stream data stored in the minimum unit buffer area of the stream input buffer (100)reaching the upper limit and the extra buffer area of the stream input buffer (100)reaching a threshold state, transmit, to the controller(500), a signal to increase a priority to access the memory (200), and
based on the right to access the memory (200) being granted, convert the input stream data stored in the minimum unit buffer area of the stream input buffer (100) into the processor data format, and transmit the input stream data to the memory (200) in the processor data format.

7. The electronic apparatus of claim 6, wherein the stream input buffer (100) is further configured to, based on the input stream data stored in the minimum unit buffer area of the stream input buffer (100) being transmitted to the memory (200) in the processor data format, move the input stream data stored in the extra buffer area of the stream input buffer to the minimum unit buffer area of the stream input buffer.

8. The electronic apparatus of any one of claims 1 to 7, wherein the stream output buffer (300) is further configured to:
transmit, to the controller (500), information indicating that the minimum unit buffer area and the extra buffer area of the stream output buffer (300) are empty,
based on being granted the right to access the memory (200), receive, from the memory (200), the computational processing result data in the processor data format, and
store the computational processing result data in the minimum unit buffer area of the stream output buffer (300).

9. The electronic apparatus of claim 8, wherein the stream output buffer (300) is further configured to:
push the computational processing result data stored in the minimum unit buffer area of the stream output buffer (300)into the extra buffer area of the stream output buffer (300), and store the computational processing result data in the minimum unit buffer area and the extra buffer area of the stream output buffer (300), and
convert the computational processing result data stored in the minimum unit buffer area of the stream output buffer (300) into the stream data format, and sequentially output the computational processing result data in the stream data format.

10. The electronic apparatus of claim 9, wherein the stream output buffer (300) is further configured to:
transmit, to the controller (500), information indicating that the minimum unit buffer area of the stream output buffer (300) is empty,
based on the right to access the memory (200) being granted, receive, from the memory (200), the computational processing result data in the processor data format, and store the computational processing result data in the minimum unit buffer area of the stream output buffer (300), and
based on the right to access the memory (200) not being granted, convert the computational processing result data stored in the extra buffer area of the stream output buffer (300) into the stream data format, and sequentially output the computational processing result data in the stream data format.

11. The electronic apparatus of claim 10, wherein the stream output buffer is further configured to:
based on the minimum unit buffer area of the stream output buffer being empty and the extra buffer area of the stream output buffer reaching a threshold state, transmit, to the controller, a signal to increase a priority to access the memory;
based on the right to access the memory (200) being granted, receive, from the memory (200), the computational processing result data in the processor data format; and
store the computational processing result data in the minimum unit buffer area of the stream output buffer (300).

12. The electronic apparatus of any one of claims 1 to 11, wherein the controller (500) is further configured to, based on receiving a request signal requesting the right to access the memory (200) from one of the processor (400), the stream input buffer (100), or the stream output buffer, grant the right to access the memory (200) to the one of the of the processor, the stream input buffer, or the stream output buffer that transmitted the request signal.

13. The electronic apparatus of any one of claims 1 to 12, wherein the controller (500) is further configured to, based on receiving the request signal requesting the right to access the memory (200)from two or more of the processor(400), the stream input buffer (100), or the stream output buffer (300), grant the right to access the memory (200) to one with a greatest priority to access the memory (200) among the two or more of the processor, the stream input buffer, or the stream output buffer that transmitted the request signal.

14. The electronic apparatus of any one of claims 1 to 13, wherein the controller (500) is further configured to, based on the stream input buffer (100) and the stream output buffer (300) being in a normal state, determine the processor (400) to have a greater priority to access the memory (200) than the stream input buffer (100) and the stream output buffer (300).

15. The electronic apparatus of any one of claims 1 to 14, wherein the controller (500) is further configured to:
based on the stream input buffer (100) and the stream output buffer (300) being in a threshold state, determine a smaller of the stream input buffer (100) or the stream output buffer (300) to have a greater priority to access the memory (200), and
based on the stream input buffer (100) being in a threshold state, determine a priority to access the memory (200) in an order of the stream input buffer (100), the processor (400), and the stream output buffer (300).
